(19) Europäisches Patentamt
European Patent Office
Office européen des brevets

(11) EP 2 869 250 A1

(12) EUROPEAN PATENT APPLICATION

(43) Date of publication:
06.05.2015 Bulletin 2015/19

(51) Int Cl.:
G06Q 10/04 (2012.01)    G06Q 10/06 (2012.01)
G06Q 50/06 (2012.01)

(21) Application number: 14184989.3

(22) Date of filing: 16.09.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 30.10.2013 JP 2013225723

(71) Applicant: FUJITSU LIMITED
Kawasaki-shi,
Kanagawa 211-8588 (JP)

(72) Inventor: Kako, Masaharu
Osaka-shi, Osaka 540-0001 (JP)

(74) Representative: Cooper-Rolfe, Elizabeth Louise
Haseltine Lake LLP
Lincoln House, 5th Floor
300 High Holborn
London WC1V 7JH (GB)

(54) Power management device, method, and program

(57) A power management device includes a processor that executes a procedure. The procedure includes: gradually increasing a power-equivalent value that is equivalent to an amount of permitted power consumption by a plurality of power consuming appliances and that is accumulated in a management accumulation section; and according to requests from each of the plurality of power consuming appliances, allocating the power-equivalent value accumulated in the management accumulation section to each of the plurality of power consuming appliances within a range such that the power-equivalent value does not become a predetermined limit value or lower.

FIG.1

EP 2 869 250 A1

**Description**

FIELD

The embodiments discussed herein are related to a power management device, a power management method, and a power management program.

BACKGROUND

Hitherto, the amount of power consumed by each installation in a facility, such as a building or home, has been managed and controlled such that the amount of power consumption of the whole facility achieves a target value.

For example, there is a proposal for an energy management device that acquires from each appliance in a facility actual values of cumulative energy consumption values for the facility over a fixed period of time from a start point, and transmits control instructions to reduce energy consumption to these appliances if the actual values exceed warning values. In such an energy management device, the warning values are based on a target pattern of cumulative energy consumption for a fixed period of time of the facility.

There is also a proposal for an energy management device that integrates branch power consumption corresponding to each branched power path, compares branch power target values associated with each of the branched power paths against integrated values of branch power consumption over a fixed period of time, and notifies if there are branch power paths where the target value exceeds the integrated values.

There is also a proposal for a power distribution system that optimizes power consumption in a building overall, and aims to rationalize power distribution to each power consuming appliance. In such a system, a target value is set for the power consumption within a specific time period, and power consumption statistical data is acquired. Measurement is collected, and cumulative values are computed of the power consumption actually consumed by non-priority appliances over the period from the start point of a specific time period to the time when the most recent meter measurement was taken by a meter. Control is then performed according to the difference between the target values set for the power consumption of the non-priority appliances and the computed cumulative values. In such a system, after setting a total target value for the amount of power consumption to be consumed during the fixed period of time by the building overall, target values are then set for each appliance so that the total of the target values of each of the power consuming appliances does not exceed the total target value.

*Related Patent Documents*

Japanese Laid-Open Patent Publication No. 2005-261050
Japanese Laid-Open Patent Publication No. 2013-5657
Japanese Laid-Open Patent Publication No. 2008-92680

However, in previously considered technology, since the target value is set for the amount of power to be consumed in a specific time period, an issue arises that sometimes power usage is limited at the end of the specific time period, and at the switch to the next period. More specifically, when the target value is set for each specific time period, it is anticipated that the set target value will be used up, or that there will only be a small amount remaining, just before the end of the specific time period. If the period changes over, then a new permitted amount of power is allocated. However, if use of the power consuming appliance is desired in the interval until the change of period, or from the end of the period across to the start of the next period, either the power consuming appliance cannot be used, or use of the power consuming appliance is interrupted partway through use, causing stress to a user.

Preferred embodiments seek to avoid unnecessarily limiting the use of power consuming appliances under power consumption management.

According to an aspect of an embodiment, a power management device includes: a processor; and a memory storing instructions, which when executed by the processor perform a procedure. The procedure includes: gradually increasing a power-equivalent value that is equivalent to an amount of permitted power consumption by a plurality of power consuming appliances and that is accumulated in a management accumulation section; and according to requests from each of the plurality of power consuming appliances, allocating the power-equivalent value accumulated in the management accumulation section to each of the plurality of power consuming appliances within a range such that the power-equivalent value does not become a predetermined limit value or lower.

BRIEF DESCRIPTION OF DRAWINGS

Fig. 1 is a block diagram illustrating a schematic configuration of a power management system according to an exemplary embodiment;

Fig. 2 is a functional block diagram illustrating a schematic configuration of a power management device according to the present exemplary embodiment;

Fig. 3 is a functional block diagram illustrating a schematic configuration of a controller of a power consuming appliance according to the present exemplary embodiment;

Fig. 4 is a schematic diagram illustrating an outline of the present exemplary embodiment;

Fig. 5 is an explanatory diagram regarding a problem with a conventional method;

Fig. 6 is an explanatory diagram regarding a problem with a conventional method;

Fig. 7 is a diagram illustrating an example of a power usage level value table and a power usage planned value table stored in a first bucket;

Fig. 8 is a diagram illustrating an example of an already secured power amount table and a power usage planned value table stored in a second bucket;

Fig. 9 is a block diagram illustrating a schematic configuration of a computer that functions as a power management device according to the present exemplary embodiment;

Fig. 10 is a block diagram illustrating a schematic configuration of a computer that functions as a control section of a power consuming appliance according to the present exemplary embodiment;

Fig. 11 is a flow chart illustrating an example of token inflow processing;

Fig. 12 is a flow chart illustrating an example of token request processing A;

Fig. 13 is a flow chart illustrating an example of token request processing B;

Fig. 14 is a flow chart illustrating an example of power consumption continuation determination processing B;

Fig. 15 is a flow chart illustrating an example of token request processing C;

Fig. 16 is a flow chart illustrating an example of power consumption continuation determination processing C;

Fig. 17 is a flow chart illustrating an example of token request processing D;

Fig. 18 is a flow chart illustrating an example of power consumption continuation determination processing D;

Fig. 19 is a flow chart illustrating an example of token allocation processing;

Fig. 20 is flow chart illustrating an example of power consumption and token return processing;

Fig. 21 is a flow chart illustrating an example of token reception processing;

Fig. 22 is a sequence diagram illustrating allocation of tokens and transitions of tokens;

Fig. 23 is a sequence diagram illustrating allocation of tokens and transitions of tokens;

Fig. 24 is a sequence diagram illustrating allocation of tokens and transitions of tokens;

Fig. 25 is a sequence diagram illustrating allocation of tokens and transitions of tokens;

Fig. 26 is a sequence diagram illustrating allocation of tokens and transitions of tokens;

Fig. 27 is a sequence diagram illustrating allocation of tokens and transitions of tokens;

Fig. 28 is a sequence diagram illustrating allocation of tokens and transitions of tokens;

Fig. 29 is a diagram illustrating another example of a power usage planned value table stored in a second bucket;

Fig. 30 is a diagram illustrating another example of an already secured power amount table and a power usage planned value table stored in a second bucket;

Fig. 31 is a diagram illustrating another example of a power usage planned value table stored in a second bucket;

Fig. 32 is a diagram illustrating another example of a power usage standard value table stored in a first bucket;

Fig. 33 is a flow chart illustrating another example of token allocation processing;

Fig. 34 is a flow chart illustrating another example of token reception processing;

Fig. 35 is a diagram illustrating another example of a power usage planned value table stored in a second bucket;

Fig. 36 is a flow chart illustrating another example of token request processing A;

Fig. 37 is a sequence diagram illustrating allocation of tokens and transitions of tokens; and

Fig. 38 is a diagram illustrating another example of a power usage standard value table stored in a first bucket.

DESCRIPTION OF EMBODIMENTS

Detailed explanation follows regarding an example of an exemplary embodiment according to technology disclosed herein, with reference to the drawings.

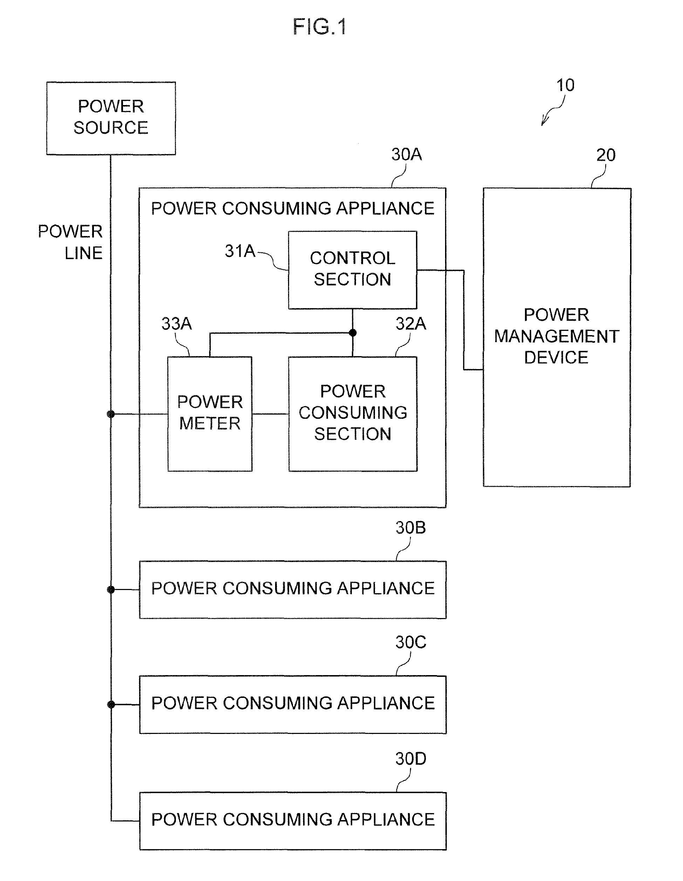

A power management system 10 according to the present exemplary embodiment, as illustrated in Fig. 1, includes a power management device 20, and plural power consuming appliances 30A, 30B, 30C, 30D. Each of the plural power consuming appliances 30A, 30B, 30C, 30D is an appliance whose amount of power consumption is managed by the power management device 20, and which is connected to the power management device 20 through a network.

The power consuming appliance 30A includes a control section 31A that controls the power consuming appliance 30A overall, a power consuming section 32A that consumes power, and a power meter 33A that measures the amount of power consumed by the power consuming section 32A. Power is supplied from a power source to the power consuming section 32A through a power line. The other power consuming appliances 30B, 30C, 30D are similarly configured and so detailed explanation is omitted thereof.

In the present exemplary embodiment, the power consuming appliance 30A is, say, an appliance with a specific operation that is not completed when supply of power is interrupted during operation of the appliance (for example a rice cooker). The power consuming appliance 30B is, say, an appliance that does incur any problem even if not operated when power is not being supplied (such as a television). The power consuming appliance 30C is, say, an appliance with operation needs that change, such as according to the peripheral environment (for example a light fitting). The power consuming appliance 30D is, say, an appliance that needs to be constantly supplied with power (for example a refrigerator). Note that the power consuming appliances are not limited to the power consuming appliances 30A, 30B, 30C, 30D described above. The power consuming appliances connected to the power management device 20 are also not limited to 4 appliances. 3 or fewer appliances may be present. 5 or more appliances may be present. In the following, when not distinguishing between the power consuming appliances 30A, 30B, 30C, 30D, they will be referred to simply as "power consuming appliances 30". When not distinguishing between the control sections 31A, 31B, 31C, 31D of each of the power consuming appliances 30A, 30B, 30C, 30D, they will be referred to simply as "control sections 31 ". Similarly, when not distinguishing between the power consuming sections 32A, 32B, 32C, 32D, they will be referred to simply as "power consuming sections 32", and when not distinguishing between the power meters 33A, 33B, 33C, 33D, they will be referred to simply as "power meters 33".

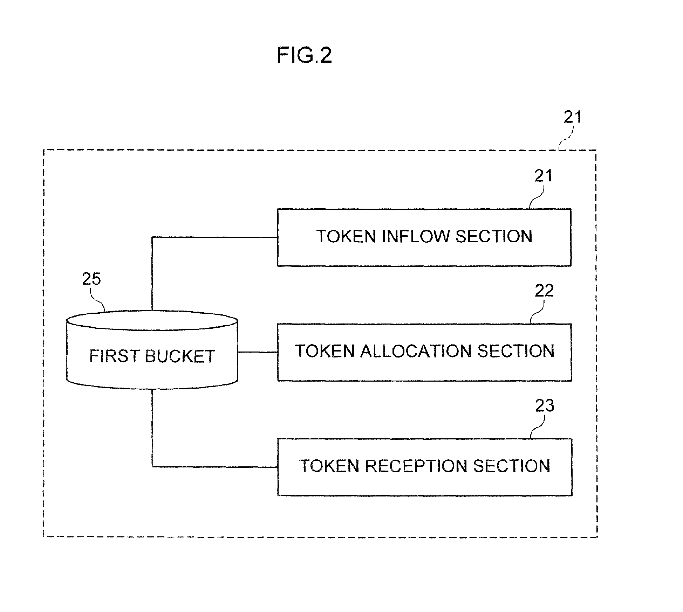

As illustrated in Fig. 2, the power management device 20 includes, as functional sections, a token inflow section 21, a token allocation section 22, a token reception section 23, and a first bucket 25. The token inflow section 21 is an example of an incrementing section of technology disclosed herein. The token allocation section 22 is an example of an allocation section of technology disclosed herein. The token reception section 23 is an example of a reception section of technology disclosed herein. The first bucket 25 is an example of a management accumulation section of technology disclosed herein.

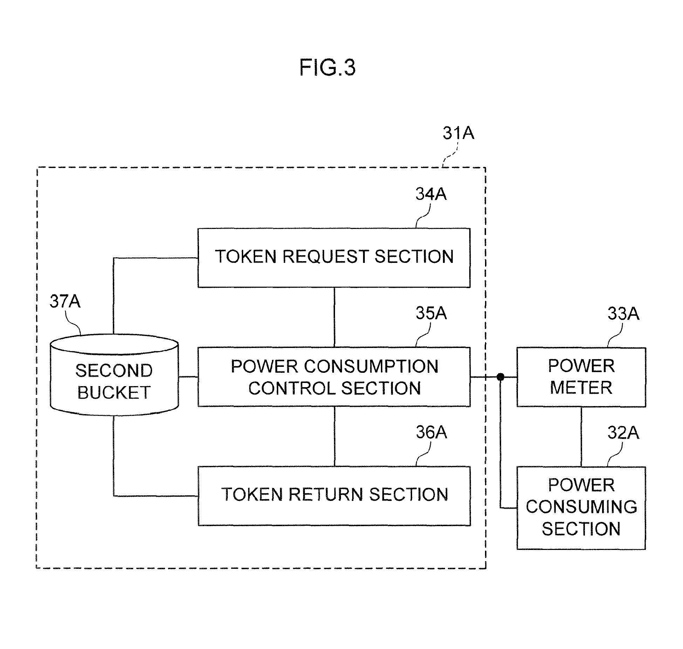

As illustrated in Fig. 3, the control section 31A of the power consuming appliance 30A includes, as functional sections, a token request section 34A, a power consumption control section 35A, a token return section 36A, and a second bucket 37A. The token request section 34A is an example of a request section of technology disclosed herein. The power consumption control section 35A is an example of a control section of technology disclosed herein. The token return section 36A is an example of a return section of technology disclosed herein. The second bucket 37A is an example of an appliance accumulation section of technology disclosed herein.

The control sections 31B, 31C, 31D of the power consuming appliances 30B, 30C, 30D are all of a similar configuration, and so detailed explanation is omitted thereof. In the following explanation, when not distinguishing between the token request sections 34A, 34B, 34C, 34D, reference is simply made to "token request sections 34". Similarly, when not distinguishing between the power consumption control sections 35A, 35B, 35C, 35D, reference is simply made to "power consumption control sections 35". Similarly, when not distinguishing between the token return sections 36A, 36B, 36C, 36D, reference is simply made to "token return sections 36".

Prior to detailed explanation of the above functional sections, explanation follows regarding the reason to manage the amount of power consumed by each of the power consuming appliances 30 using the first bucket 25 and the second bucket 37.

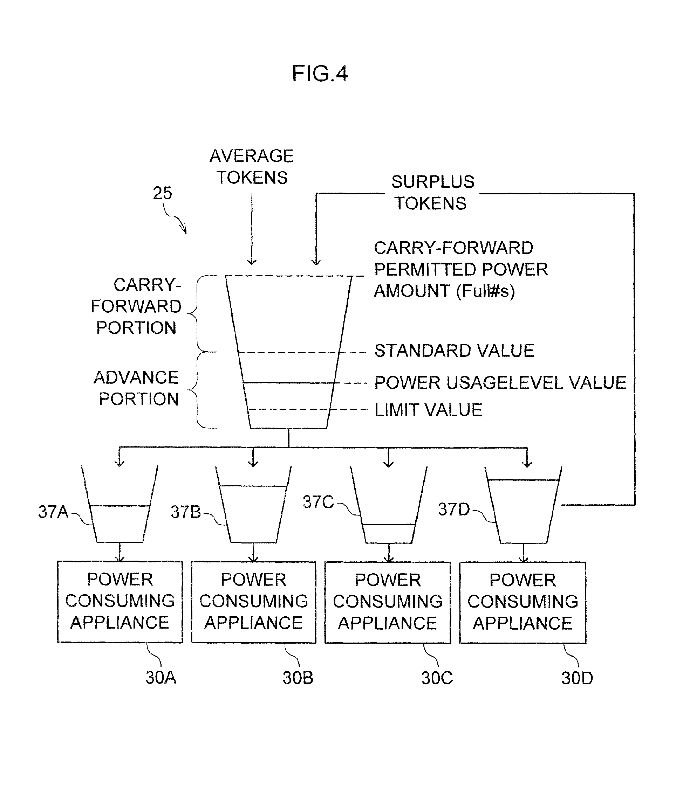

As illustrated in Fig. 4, tokens equivalent to the amount of power consumed by the power consuming appliances 30 are accumulated in the first bucket 25. The tokens use the same units as the units of the amount of power (kwh).

The power usage level value is a value representing the current value of the tokens accumulated in the first bucket 25. Tokens flow into the first bucket 25 at a specific quantity rate for a specific time period. Such tokens are called average tokens. The power usage level value is increased at a specific rate by the average tokens flowing in. The specific rate may be set as a value (WH/T) obtained by dividing a planned value (WH) of the total amount of power to be consumed by the power consuming appliances 30 in specific time period (T) by the specific time period (H). The planned value of the total amount of power (WH) is referred to below as the in-period permissible power usage amount. The power consuming appliances 30 consume, while sharing, the in-period permissible power usage amount (WH) over the specific time period (T), and the specific time period (T) is referred to below as the power sharing time period (T).

A standard value is a value that maintains the power usage level value when power is consumed by the power consuming appliances 30 at the same rate as the inflow of average tokens. For example, if the standard value is "0", then when the power usage level value is plus, this indicates that the amount of power consumed at the current point in time is lower than the planned value, namely that there is a carry-forward portion present. However, when the power usage level value is minus, then this indicates the amount of power consumed at the current point in time is higher than the planned value, namely that there is an advance portion present.

A limit value is a value for token requests (described in detail below) to limit power consumption by the power consuming appliances 30 such that the power usage level value becomes the limit value or lower, in order to prevent tokens in the first bucket 25 from running out.

A carry-forward permitted power amount indicates the maximum accumulation amount in the first bucket 25. The power usage level value increases when the average token inflow amount and a return amount of surplus tokens (described in detail below) are together greater than the tokens equivalent to the amount of power consumed in the power consuming appliances 30. The tokens of the limit value or greater in the first bucket 25 are available to allocate to the power consuming appliances 30 (described in detail below), and are used to prevent unlimited allocation. Hence, since the amount of power equivalent to the tokens exceeding the carry-forward permitted power amount that overflow from the first bucket 25 are not allocated to the power consuming appliances 30, they indicate the amount of power saved. The amount of increase in the tokens may be set so as to be enable unlimited accumulation, however the carry-forward permitted power amount is preferably set from the viewpoints of energy saving and cost saving.

The power consuming appliances 30 each include a second bucket 37. The power consuming appliances 30 request tokens equivalent to the amount of power required for operation from the power management device 20 when the appliance operates itself. The tokens allocated from the power management device 20 are accumulated in the second bucket 37. Each of the power consuming appliances 30 reduces the tokens in the second bucket 37A according to the amount of power consumed by operating the appliance itself. Each of the power consuming appliances 30 stops operation of the appliance itself when the tokens inside the second bucket 37A have run out. Each of the power consuming appliances 30 returns to the first bucket 25 any surplus tokens remaining in the second bucket 37 after operation of the appliance itself has finished.

Explanation follows regarding a conventional method in which a start and end of a period (such as from 0:00 to 24:00 of day 1, or from the first day to the third day of January), and a total consumable amount of power within the period, are determined, and power consumption display and power usage limitation are performed in order to save power. Explanation follows regarding an example of a rice cooker, as an example of a power consuming appliance.

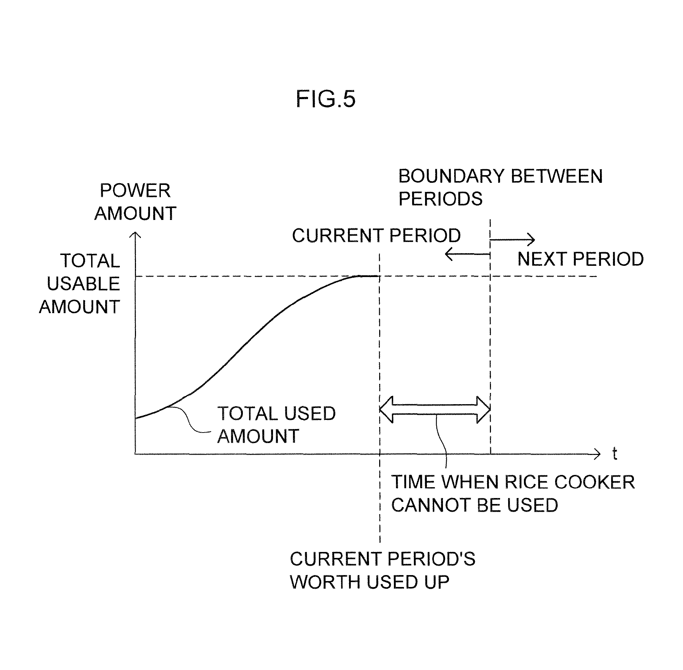

According to the conventional method, the total consumable amount for a period is allocated at the start time of the new period. Thus, as illustrated in Fig. 5, if the pre-set total consumable amount has been used up prior to the end of the current period, this results in a "period in which the rice cooker cannot be used" from that point in time, until the next total consumable amount is allocated at the start time of the next period.

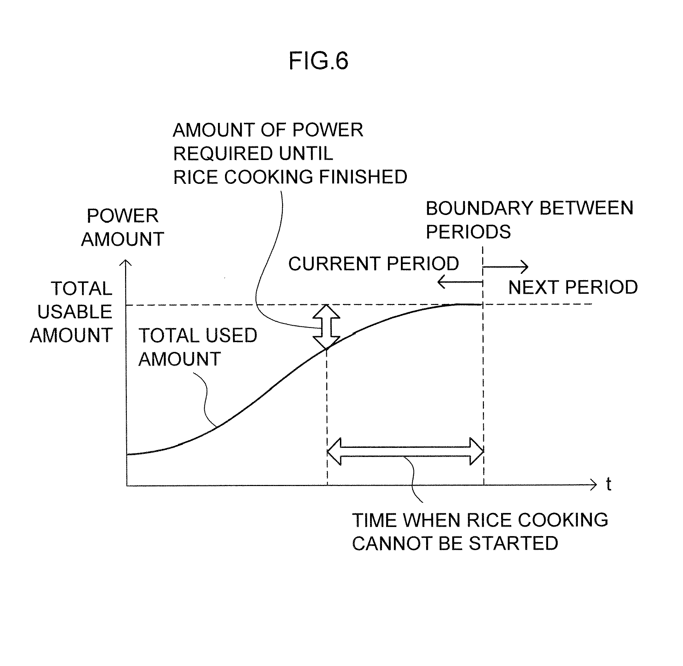

Moreover, as illustrated in Fig. 6, if usage of the rice cooker is started in a period in which the remaining amount of power is less than the required amount of power to finish cooking the rice, then starting using the rice cooker leads to the rice cooking function being forcibly shut down during cooking, and finishing in a state of "uneatable rice". In order to avoid such a situation, there is a need to check whether the amount of consumable power remaining at the end of a period is sufficient to perform rice cooking, before starting cooking the rice. Moreover, even if sufficient checking has been performed, sometimes the rate of consumption of the remaining power rises, depending on the operational state of other power consuming appliances, leading to the remaining power being exhausted partway through cooking. In such cases, as described above, this leads to the rice cooking function being forcibly shut down during cooking, finishing in a state of "uneatable rice".

The conventional method of allocating a total consumable amount by specific time units accordingly results in inconveniences such as being unable to use the power consuming appliance at the end of a period, or near to the boundary between periods, or ending usage partway through, causing stress to a user.

However, in the present exemplary embodiment, a total consumable amount is not allocated by specific time units, and instead tokens are gradually increased in the first bucket 25, and the tokens accumulated in the first bucket 25 are allocated to the power consuming appliances 30 at the point when requested by the power consuming appliances 30. Thus due to the principle of there being no ends of periods in which a target power amount is allocated, and no boundaries between periods, there is no inconvenience incurred by not being able to use the power consuming appliances 30 at the end of a period, or in the vicinity of the boundary between periods. Moreover, due to the tokens accumulated in the first bucket 25 increasing at the specific rate, there is no allocation of power to each of the power consuming appliances 30 at an amount greatly exceeding the predicted amount at the point in time when power is consumed by the power consuming appliances 30. Consequently, in the long run this enables the total amount of power consumed by the power consuming appliances 30 to be limited to the planned value or lower.

Returning to Fig. 2, detailed explanation follows regarding each of the functional sections of the power management device 20.

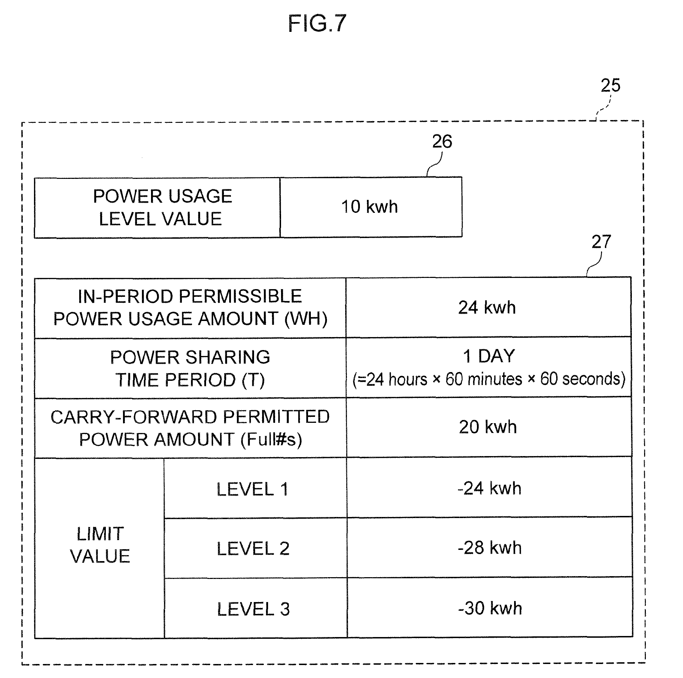

As illustrated in Fig. 7, the first bucket 25 includes a power usage level value table 26 stored with a power usage level value indicating the current accumulated amount of tokens in the first bucket 25. The state of overall power consumption in the power consuming appliances 30 (such as the presence of a carry-forward portion, the presence of an advance portion, the average consumption amount) is ascertained from the power usage level value stored in the power usage level value table 26.

As illustrated in Fig. 7, the first bucket 25 includes a power usage planned value table 27. Data necessary for determining the average token inflow amount and amount of power to allocate to the power consuming appliances 30 is stored in the power usage planned value table 27. The example in Fig. 7 is stored with the in-period permissible power usage amount (WH), the power sharing time period (T), a carry-forward permitted power amount (Full#s), and limit values. The limit values are determined or each of plural levels (levels 1, 2, 3 in the example of Fig. 7) corresponding to the degree of emergency of the token requests from the power consuming appliances 30. In the example of Fig. 7, the in-period permissible power usage amount (WH), the carry-forward permitted power amount (Full#s), and the respective limit values are determined as values when the standard values are "0".

The token inflow section 21 acquires the in-period permissible power usage amount (WH) and the power sharing time period (T) from the power usage planned value table 27 of the first bucket 25, and computes the token inflow amount according to the following Equation (1).

$$\text{token inflow amount}$$
$$= (\text{in-period permissible power usage amount (WH)}/ \text{power sharing time period}$$
$$(T))*t \quad \text{Equation (1)}$$

Wherein t is the time from inflow of average tokens the previous time to the inflow the current time. The token inflow section 21 acquires the power usage level value from the power usage level value table 26 of the first bucket 25, adds the computed token inflow amount, and sets this in the power usage level value table 26.

The token allocation section 22 determines the token allocation amount allocated to the power consuming appliances 30 according token requests from the power consuming appliances 30. Token requests from the power consuming appliances 30 include data representing a token request amount, a minimum necessary power amount, a power securing condition, and a power usage degree of emergency. Detailed explanation is given later regarding token requests. Specifically, the token allocation section 22 acquires the power usage level value from the power usage level value table 26, and acquires the limit values corresponding to the level of the power usage degree of emergency contained in the token request from the power usage planned value table 27. The token allocation section 22 then determines the token allocation amounts to allocate to the power consuming appliances 30, according to the power securing condition, and within a range such that the tokens in the first bucket 25 do not become the acquired limit value or lower.

The token allocation section 22 notifies the power consuming appliances 30 of the determined token allocation amounts. The token allocation section 22 also subtracts the determined token allocation amounts from the acquired power usage level value, and sets these in the power usage level value table 26.

The token reception section 23 receives surplus tokens returned from the power consuming appliances 30, and returns them to the first bucket 25. Specifically, at receipt of the surplus tokens, the token reception section 23 acquires the power usage level value from the power usage level value table 26, adds a token return amount of any surplus tokens, and sets this in the power usage level value table 26.

Detailed explanation follows regarding each of the functional sections of the control section 31A of the power consuming appliance 30A, with reference to Fig. 3.

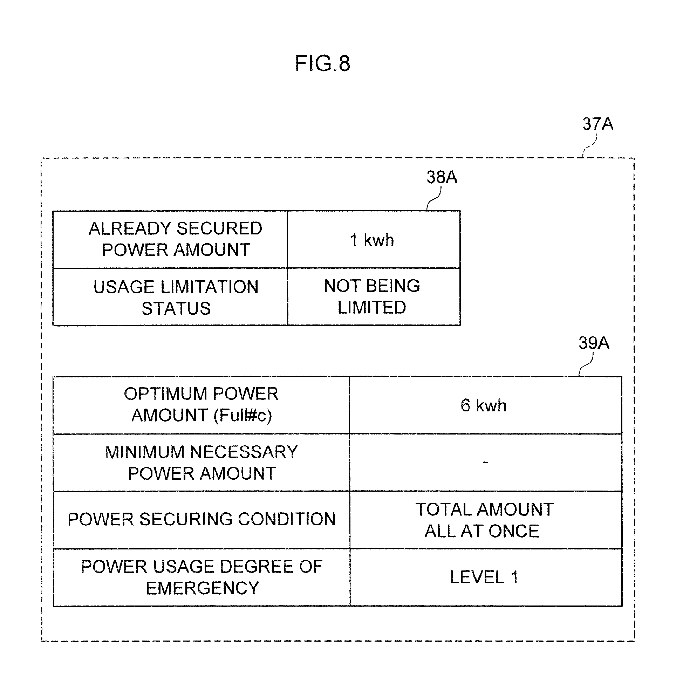

As illustrated in Fig. 8, the second bucket 37A includes an already secured power amount table 38A stored with an already secured power amount and a usage limitation status. The already secured power amount is the current accumulated amount of tokens in the second bucket 37A, namely indicates the power amount (remaining amount) consumable by the power consuming appliance 30A. The usage limitation status is data indicating whether usage of the power consuming appliances 30 is being limited or not being limited.

As illustrated in Fig. 8, the second bucket 37A includes a power usage planned value table 39A stored with data representing an optimum power amount (Full#c), a minimum required power amount, a power securing condition, and a power usage degree of emergency. The optimum power amount (Full#c) is a power amount for comfortably using the functions of the power consuming appliance 30A, and is a value representing the maximum value of the second bucket 37A. The minimum required power amount is the minimum power amount required to protect the power consuming appliance 30A. For example, it is a power amount required for shutdown processing, or the like. As illustrated in Fig. 8, "-" is stored when there is no minimum required power amount.

The power securing condition is a condition to determine the allocation amount of tokens when requesting the power management device 20 for tokens to secure power. The power securing condition employed here includes "total amount all at once" and "any securable amount". "Total amount all at once" is a condition to secure the total amount of requested tokens all at once. It is a condition that determines not to allocate tokens in cases in which the remaining amount of tokens in the first bucket 25 of the power management device 20 is less than the total amount of requested tokens. The power securing condition is "total amount all at once" in cases of an appliance such as the power consuming appliance 30A (for example a rice cooker) where a specific operation is not completed if power supply is interrupted partway through operation of the appliance. "Any securable amount" is a condition that determines to allocate any tokens capable of being allocated even in cases in which the remaining amount of tokens in the first bucket 25 of the power management device 20 is less than the total amount of requested tokens.

The power usage degree of emergency is a value indicating the degree of emergency (level 1, 2, 3) when using the power consuming appliance 30A. The higher the numerical value of the level the higher the degree of emergency. As illustrated in Fig. 7, the limit value reduces as the level becomes higher, increasing the power amount capable of being allocated to the power consuming appliances 30, and reducing the possibility that usage of the power consuming appliance 30A will be limited.

The token request section 34A acquires the already secured power amount from the already secured power amount table 38A when a user instructs start of usage of the power consuming appliance 30A. The token request section 34A acquires data for the optimum power amount (Full#c), the minimum required power amount, the power securing condition, and the power usage degree of emergency from a power usage planned value table 39A. The token request section 34A then subtracts the acquired already secured power amount from the acquired optimum power amount (Full#c) to given the token request amount. The token request section 34A then issues a token request to the power management device 20 including data for the calculated token request amount, and for the acquired minimum required power amount, a power securing condition, and a power usage degree of emergency.

The on acquisition of tokens allocated from the power management device 20, the token request section 34A adds the already secured power amount acquired from the already secured power amount table 38A to the token allocation amount of the allocated tokens, and sets this in the already secured power amount table 38A.

The power consumption control section 35A reduces the tokens in the second bucket 37A according to the amount of power consumed by the power consuming section 32A. More specifically, the power consumption control section 35A acquires the amount of power consumed by the power consuming section 32A from a measurement value of the power meters 33A. The power consumption control section 35A acquires the already secured power amount from the already secured power amount table 38A, subtracts the power amount consumed, and sets this in the already secured power amount table 38A. The power consumption control section 35A then controls the power consuming section 32A so as to stop operation if a user has instructed use of the power consuming appliances 30 to be stopped, or if the already secured power amount reaches 0.

The token return section 36A returns, to the power management device 20, any surplus tokens remaining in the second bucket 37A after operation of the power consuming section 32A has been stopped by the power consumption control section 35A. More specifically, when notification to stop operation is received from the power consumption control section 35A, the token return section 36A acquires the already secured power amount from the already secured power amount table 38A, and returns the acquired already secured power amount as surplus tokens to the power management device 20. When the surplus tokens have been returned, the token return section 36A sets the already secured power amount of the already secured power amount table 38A to "0". Note that although explanation here is of a case in which all the tokens that remain in the second bucket 37A when operation is stopped are treated as surplus tokens, configuration may be made in which only a portion of the remaining tokens are returned as surplus tokens.

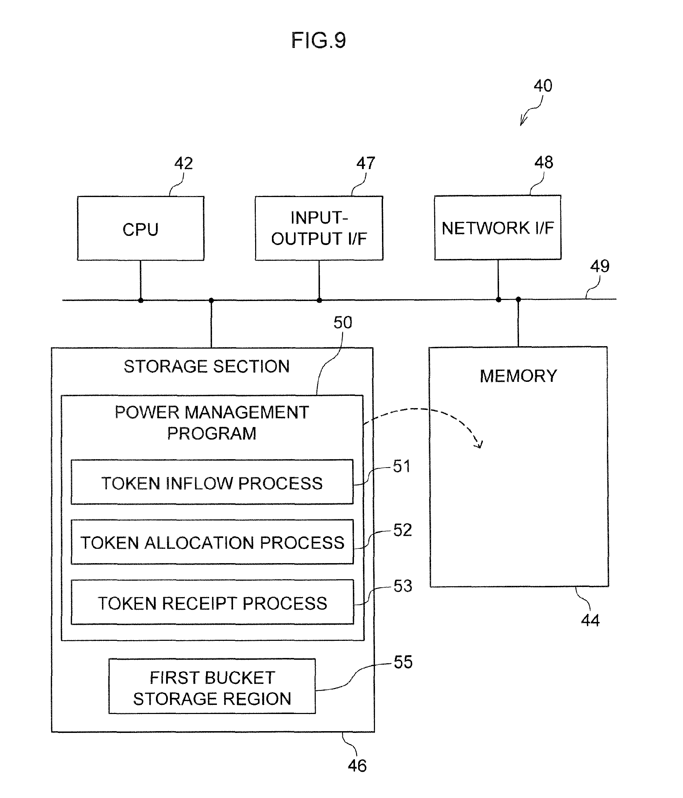

The power management device 20 may, for example, be implemented by a computer 40 illustrated in Fig. 9. A computer 40 includes a CPU 42, a memory 44, a non-volatile storage section 46, an input-output interface (I/F) 47, and a network I/F 48, mutually connected together by a bus 49.

The storage section 46 may be implemented by a Hard Disk Drive (HDD), a flash memory, or the like. A power management program 50 to cause the computer 40 to function as a power management device 20 is stored in the storage section 46, serving as a storage medium. The storage section 46 also includes a first bucket storage region 55. The CPU 42 reads the power management program 50 from the storage section 46, expands the power management program 50 in the memory 44, and sequentially executes processes of the power management program 50.

The power management program 50 includes a token inflow process 51, a token allocation process 52, and a token receipt process 53.

The CPU 42 operates as the token inflow section 21 illustrated in Fig. 2 by executing the token inflow process 51. The CPU 42 operates as the token allocation section 22 illustrated in Fig. 2 by executing the token allocation process 52. The CPU 42 operates as the token reception section 23 illustrated in Fig. 2 by executing the token receipt process 53.

In cases in which the power management device 20 is implemented by the computer 40, the first bucket storage region 55 is employed as a region to store the first bucket 25 illustrated in Fig. 2. The computer 40 implemented by the power management program 50 accordingly functions as the power management device 20.

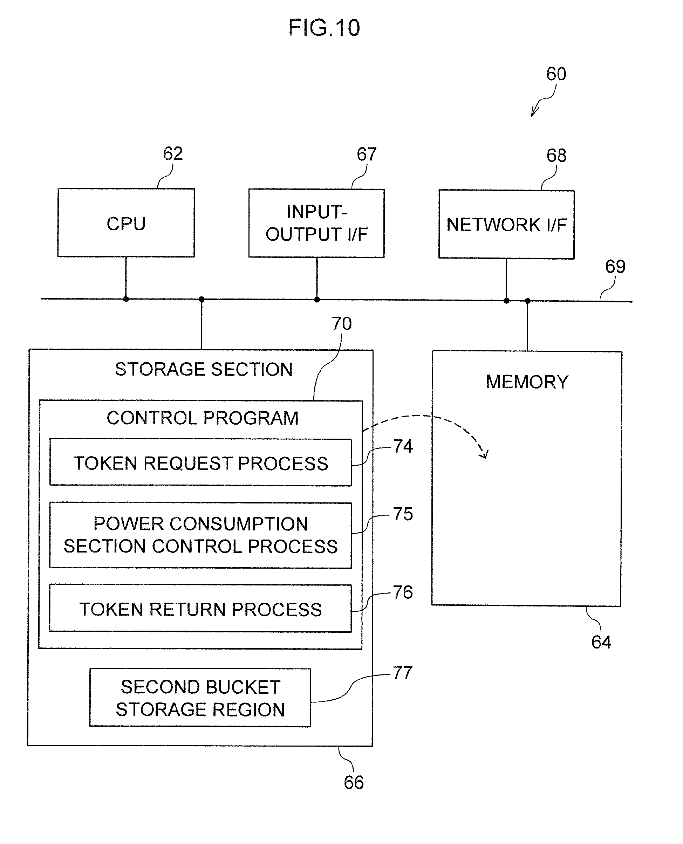

Each of the control sections 31 of the power consuming appliances 30 may, for example, be implemented by a computer 60 as illustrated in Fig. 10. The computer 60 includes a CPU 62, a memory 64, a non-volatile storage section 66, an input-output interface (I/F) 67, and a network I/F 68. The CPU 62, the memory 64, the storage section 66, the input-output I/F 67, and the network I/F 68 are mutually connected together by a bus 69.

The storage section 66 may be implemented by a Hard Disk Drive (HDD), a flash memory, or the like. A control program 70 to cause the computer 60 to function as the control section 31 is stored in the storage section 66, serving as a storage medium. The storage section 66 also includes a second bucket storage region 77. The CPU 62 reads the control program 70 from the storage section 66, expands the control program 70 in the memory 64, and sequentially executes processes of the control program 70.

The control program 70 includes a token request process 74, a power consumption section control process 75, and a token return process 76.

The CPU 42 operates as the token request section 34 illustrated in Fig. 3 by executing the token request process 74. The CPU 62 operates as the power consumption control section 35 illustrated in Fig. 3 by executing the power consumption section control process 75. The CPU 62 operates as the token return section 36 illustrated in Fig. 3 by executing the token return process 76.

In cases in which the control sections 31 is implemented by the computer 60, the second bucket storage region 77 is employed as a region where the second bucket 37 illustrated in Fig. 3 is stored. The computer 60 executing the control program 70 accordingly functions as the control sections 31 of the power consuming appliance 30.

The power management device 20 and each of the control sections 31 may be implemented with, for example, a semiconductor integrated circuit, and more specifically with an Application Specific Integrated Circuit (ASIC) or the like.

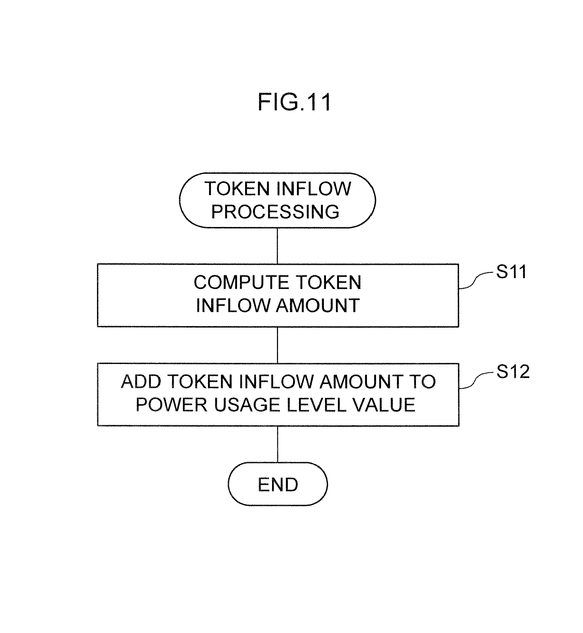

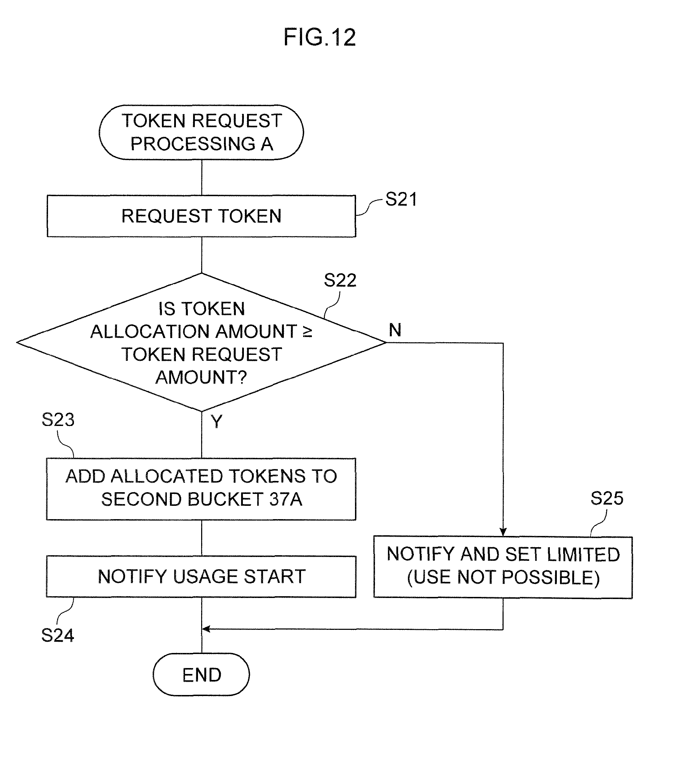

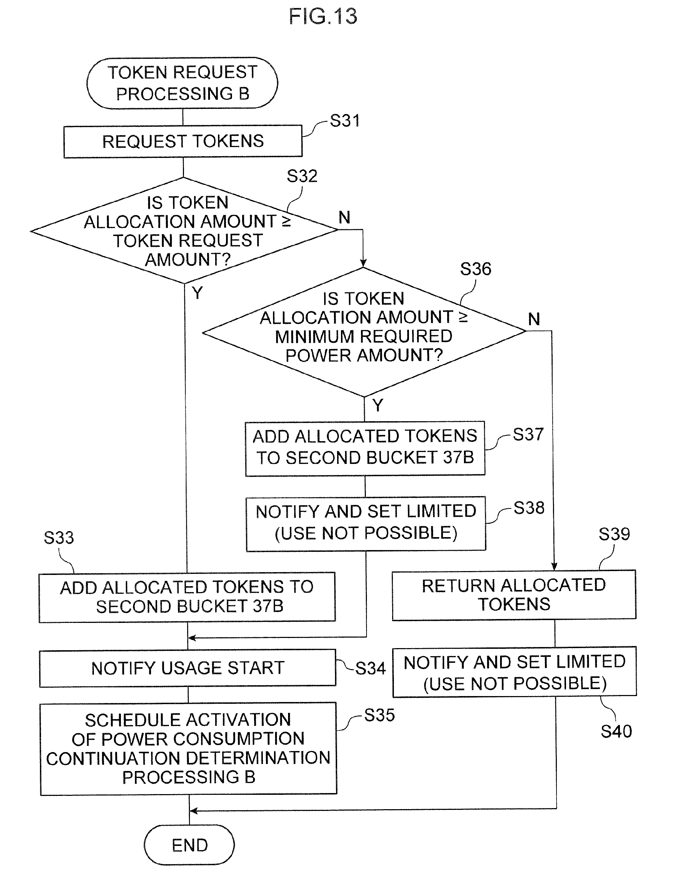

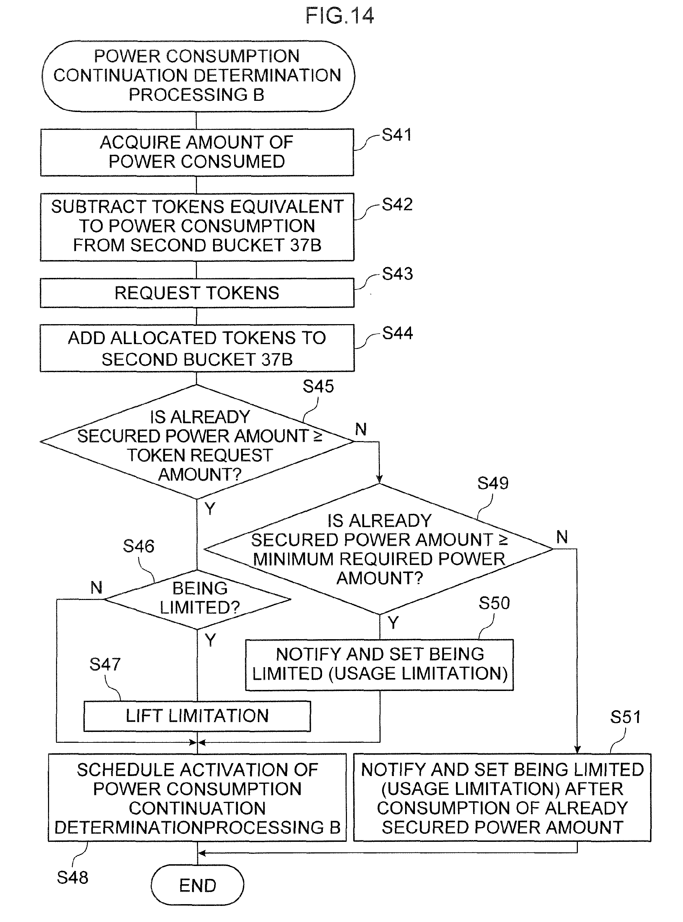

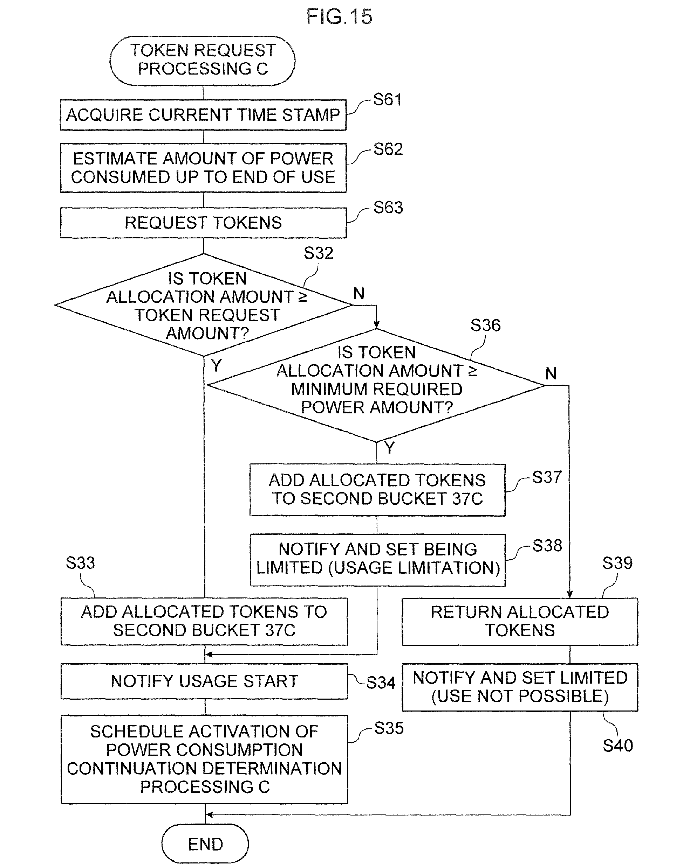

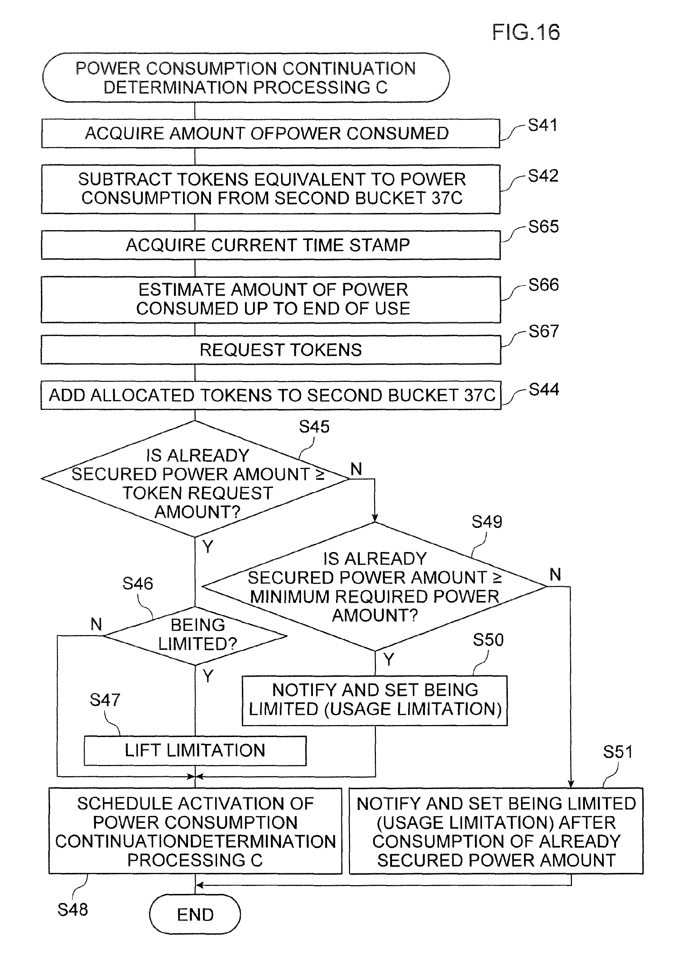

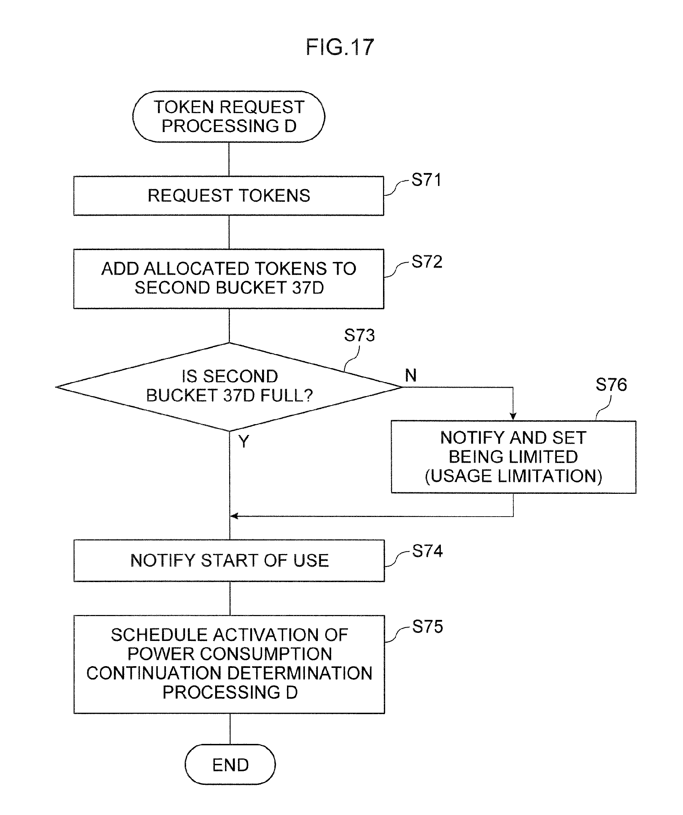

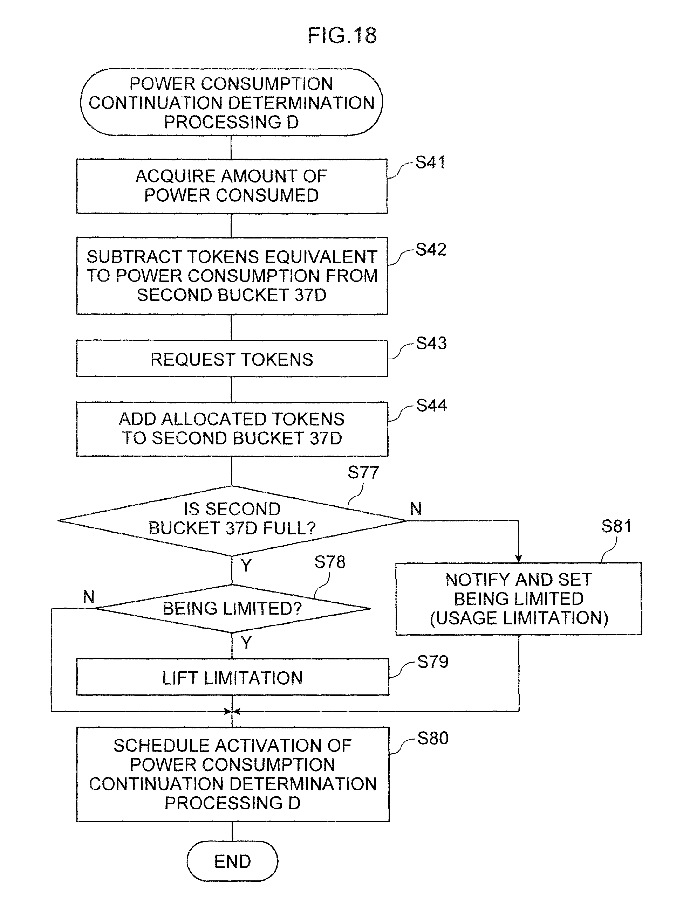

Explanation next follows regarding operation of the power management system 10 according to the present exemplary embodiment. First, the power management device 20 executes the token inflow processing illustrated in Fig. 11. The power consuming appliances 30 notify the power management device 20 with token requests by executing token request processing and power consumption continuation determination processing illustrated in Fig. 12 to Fig. 18. Fig. 12 is a flow chart illustrating token request processing A executed by the power consuming appliance 30A. Fig. 13 is a flow chart illustrating token request processing B executed by the power consuming appliance 30B. Fig. 14 is a flow chart illustrating power consumption continuation determination processing B executed by the power consuming appliance 30B. Fig. 15 is flow chart illustrating token request processing C executed by the power consuming appliance 30C. Fig. 16 is a flow chart illustrating power consumption continuation determination processing C executed by the power consuming appliance 30C. Fig. 17 is a flow chart illustrating token request processing D executed by the power consuming appliance 30D. Fig. 18 is a flow chart illustrating power consumption continuation determination processing D executed by the power consuming appliance 30D.

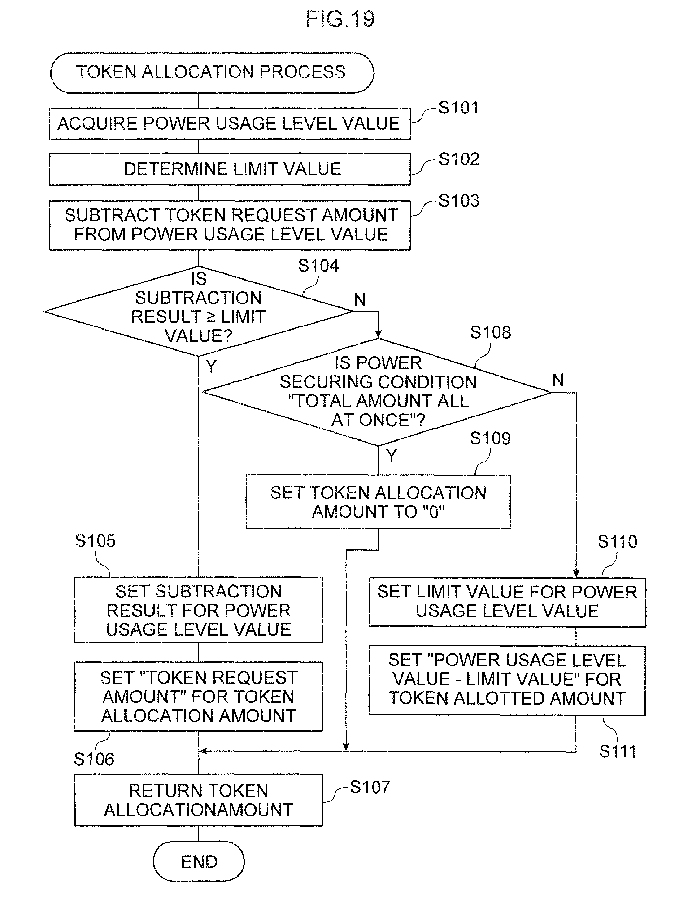

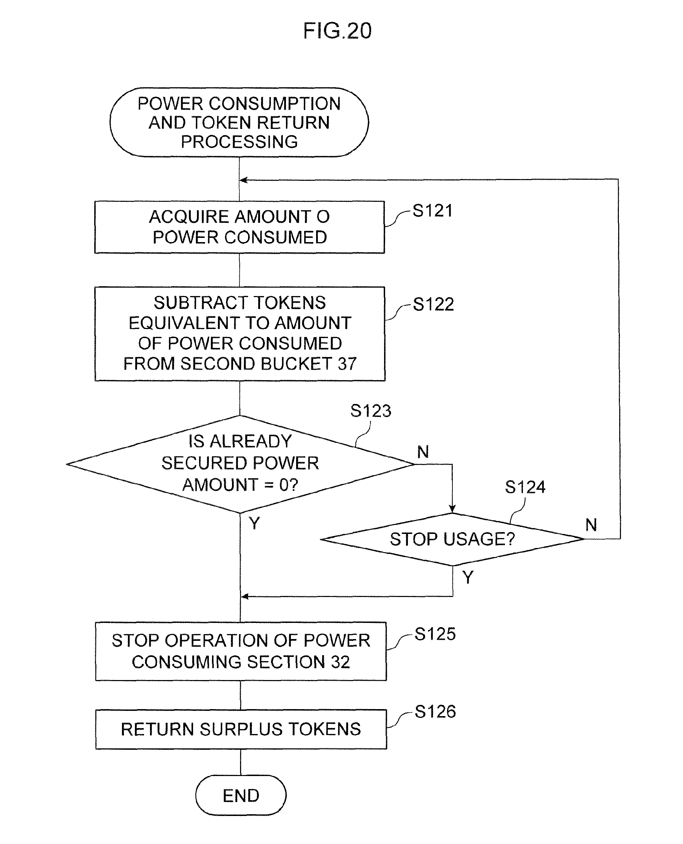

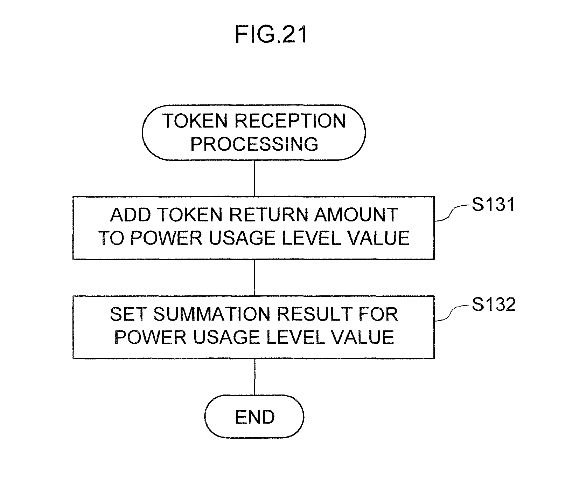

On receipt of the token requests, the power management device 20 allocates tokens to the power consuming appliances 30 by executing the token allocation processing illustrated in Fig. 19. The power consuming appliances 30 that have been allocated the tokens then execute the power consumption and token return processing illustrated in Fig. 20. In the power management device 20, the tokens returned from the power consuming appliances 30 are received by executing the token reception processing illustrated in Fig. 21.

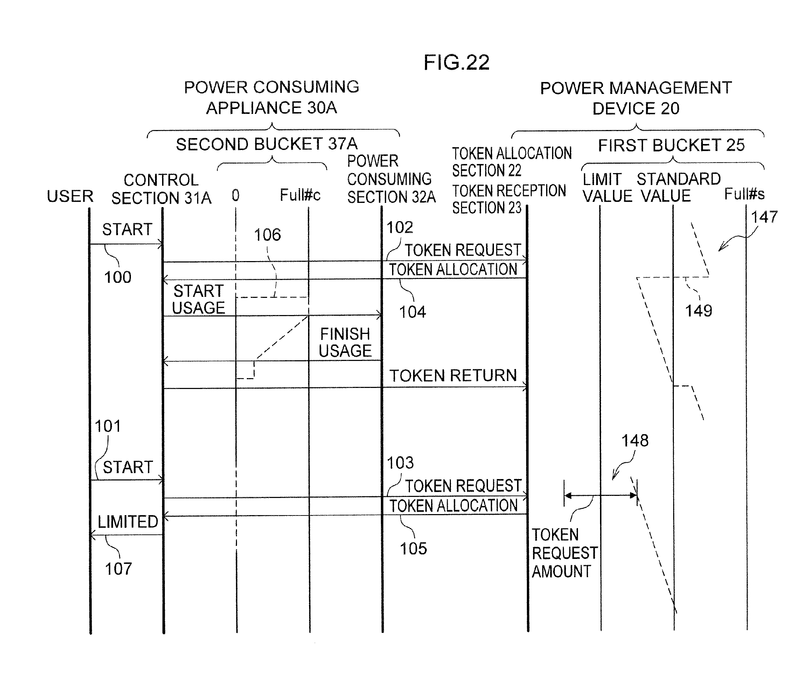

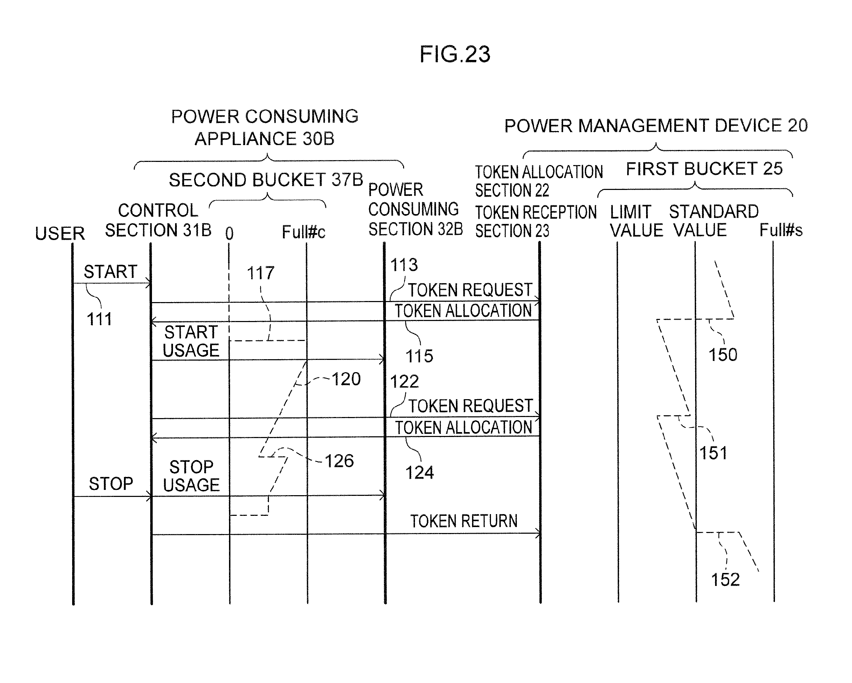

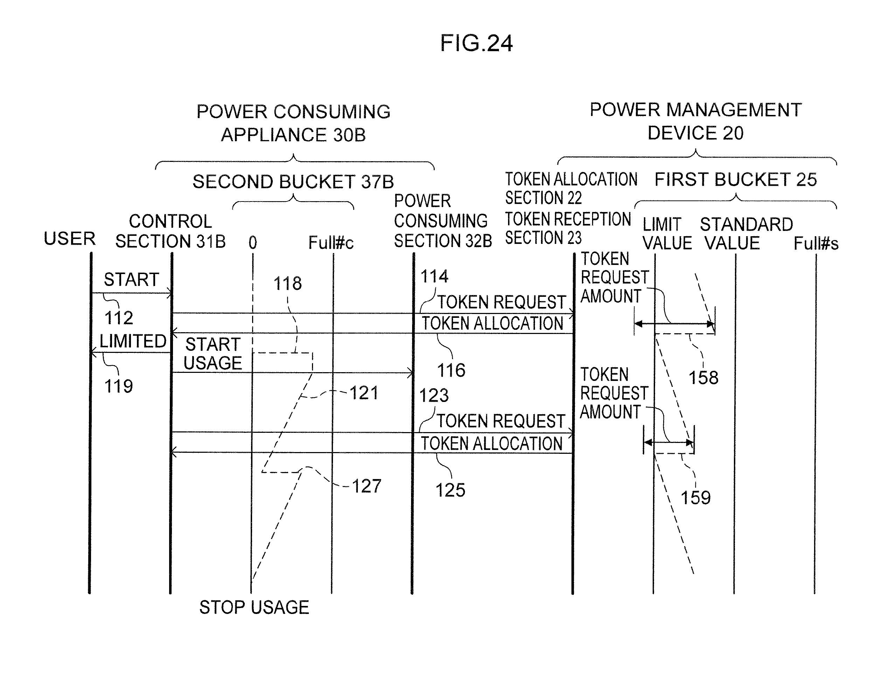

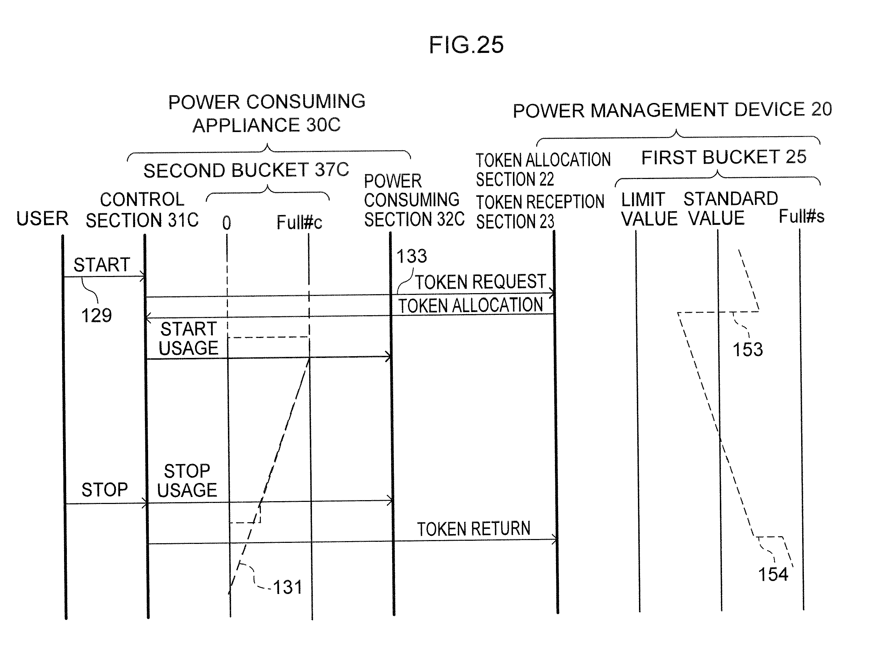

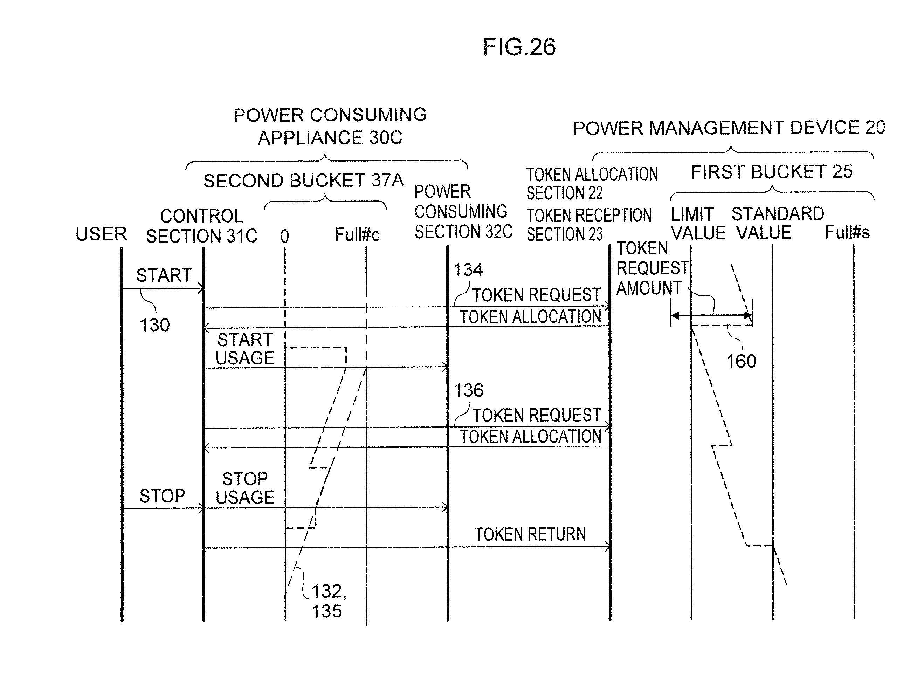

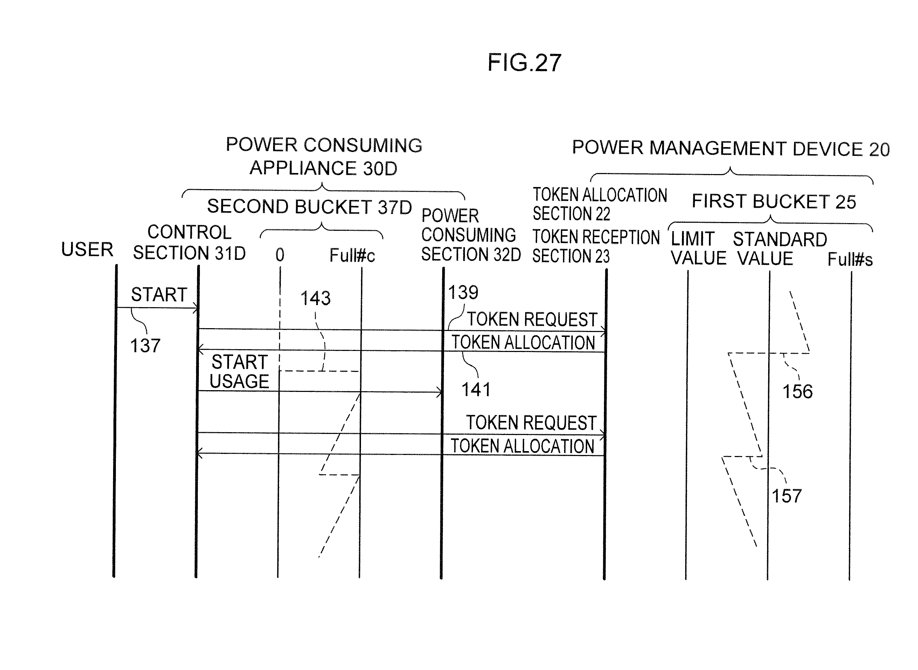

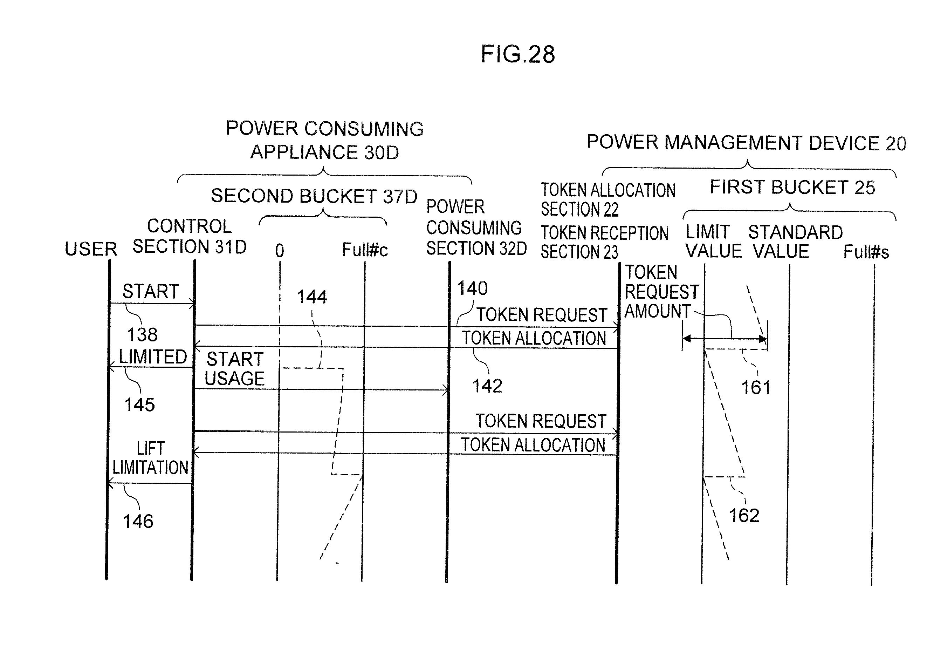

Detailed explanation follows regarding each of the processing with reference to the sequence diagrams illustrated in Fig. 22 to Fig. 28 depicting transitions in the tokens amounts accumulate in the first bucket 25 and the second bucket 37. Fig. 22 is a sequence diagram illustrating allocation of tokens to the power consuming appliances 30A. Fig. 23 is a sequence diagram illustrating allocation of tokens to the power consuming appliances 30B in a situation in which sufficient tokens have been accumulated in the first bucket 25. Fig. 24 is a sequence diagram illustrating allocation of tokens to the power consuming appliances 30B in a state in which there are insufficient of the tokens accumulated in the first bucket 25. Fig. 25 is a sequence diagram illustrating allocation of tokens to the power consuming appliances 30C in a state in which sufficient tokens have been accumulated in the first bucket 25. Fig. 26 is a sequence diagram illustrating allocation of tokens to the power consuming appliances 30C in a state in which there are insufficient of the tokens accumulated in the first bucket 25. Fig. 27 is a sequence diagram illustrating allocation of tokens to the power consuming appliances 30D in a state in which sufficient tokens have been accumulated in the first bucket 25. Fig. 28 is a sequence diagram illustrating allocation of tokens to the power consuming appliances 30D in a state in which there are insufficient tokens accumulated in the first bucket 25

At step S11 of the token inflow processing illustrated in Fig. 11, the token inflow section 21 acquires the in-period permissible power usage amount (WH) and the power sharing time period (T) from the power usage planned value table 27 of the first bucket 25, and computes the token inflow amount, for example according to Equation (1).

Then, at step S 12, the token inflow section 21 acquires the power usage level value from the power usage level value table 26 of the first bucket 25. The token inflow section 21 then adds this to the token inflow amount computed at step S11, sets the sum in the power usage level value table 26, and then ends the token inflow processing.

Due to executing the token inflow processing every startup time t, as illustrated in the sequence diagrams of Fig. 22 to 28, the tokens amount accumulated in the first bucket 25 is gradually added to (moves from the limit value side to the Full#s side).

The token request processing A illustrated in Fig. 12 is started when instructed (such as at power input) by a user to start use of the power consuming appliance 30A (from 100 to 101 in Fig. 22).

At step S21, the token request section 34A acquires the already secured power amount from the already secured power amount table 38A. The token request section 34A acquires the optimum power amount (Full#c), the minimum required power amount, the power securing condition, and the power usage degree of emergency from the power usage planned value table 39A. The token request section 34A then subtracts the acquired already secured power amount from the acquired optimum power amount (Full#c) to arrive at the token request amount. The token request section 34A notifies the power management device 20 with a token request including data for the calculate token request amount, and the acquired minimum required power amount, the power securing condition, and the power usage degree of emergency (102 or 103 in Fig. 22).

Then, at step S22, after tokens have been acquired from the power management device 20 (104 or 105 in Fig. 22), the token request section 34A determines whether or not the allocated token allocation amount is the token request amount or greater. In the power consuming appliance 30A, the power securing condition is "total amount all at once", and so the token allocation amount is either the same as the token request amount or 0. The determination as to whether or not the allocated token allocation amount is the token request amount or greater is accordingly, in this case, equivalent to a determination as to whether or not tokens have been allocated. Processing proceeds to step S23 if the token allocation amount is the token request amount or greater, and the processing proceeds to step S25 if the token allocation amount is less than the token request amount.

At step S23, the token request section 34A acquires the already secured power amount from the already secured power amount table 38A, adds the token allocation amount, and sets the sum in the already secured power amount table 38A. Namely, the allocated tokens are added to the second bucket 37A (106 in Fig. 22).

Then at step S24, the token request section 34A notifies start of use of the power consuming appliance 30A to the power consumption control section 35A, and ends the token request processing A.

At step S25, the token request section 34A notifies the user that there is a limitation (use not possible) on the function (in this case cooking rice) of the power consuming appliance 30A (107 of Fig. 22). The token request section 34A then sets "being limited" as the item "usage limitation status" item in the power usage planned value table 39A to indicate that there is a limitation in place on the usage of the power consuming appliance 30A, and ends the token request processing A.

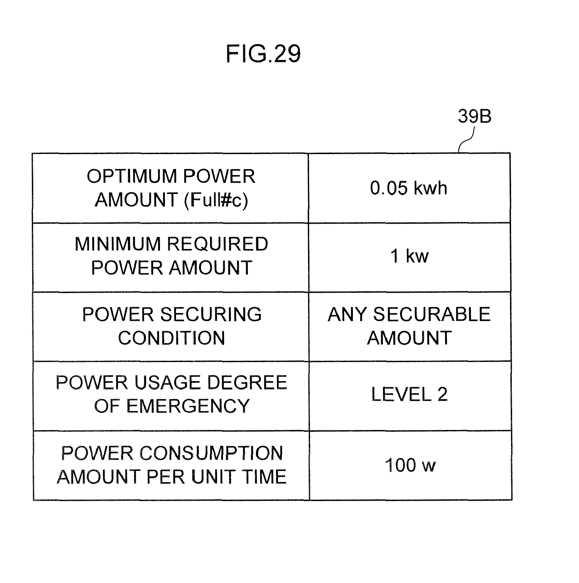

When start of usage of the power consuming appliance 30B is instructed by a user (such as by power introduction) (111 of Fig. 23 or 112 of Fig. 24), then the token request processing B illustrated in Fig. 13 is started. Note that processing similar to that of the token request processing A is indicated with the step numbers of the token request processing A illustrated in Fig. 12, and detailed explanation thereof is omitted. The power usage planned value table 39B stored in the second bucket 37B of the power consuming appliance 30B is illustrated in Fig. 29. In the example in Fig. 29, "power consumption amount per unit time" is added as an item to the power usage planned value table 39A stored in the second bucket 37A of the power consuming appliance 30A illustrated in Fig. 7.

Similarly to at step S21, at step S31 the token request section 34B notifies a token request to the power management device 20 (113 of Fig. 23 or 114 of Fig. 24).

Then, similarly to at step S22, at step S32 the token request section 34B acquires the token allocation amount (115 of Fig. 23 or 116 of Fig. 24), and determines whether or not the token allocation amount is the token request amount or greater. Processing proceeds to step S33 if the token allocation amount is the token request amount or greater, and processing proceeds to step S36 if the token allocation amount is less than the token request amount.

Similarly to at step S23, at step S33 the token request section 34B adds the allocated tokens to the second bucket 37B.

Similarly to at step S24, at step S34 the token request section 34B notifies the power consumption control section 35B of the start of usage of the power consuming appliance 30B.

Then at step S35, the token request section 34B arranges activation of the power consumption continuation determination processing B, and then ends the token request processing B. The time until activation of the power consumption continuation determination processing B may, for example, be computed according the following Equation (2).

$$\text{Time until activation of the power consumption continuation determination}$$
$$\text{processing B} = \text{Min} \left( (\text{already secured power amount}/3 \times \text{power consumption amount per unit time}), ((\text{already secured power amount - minimum required power amount})/ \text{power consumption amount per unit time}) \right) \qquad \text{Equation (2)}$$

Note that the power consumption amount per unit time employs a value stored in the power usage planned value table 39B.

At step S36, the token request section 34B acquires the minimum required power amount from the power usage planned value table 39B, and determines whether or not the token allocation amount is the minimum required power amount or greater. Processing proceeds to step S37 if the token allocation amount is the minimum required power amount or greater, and processing proceeds to step S39 if the token allocation amount is less than the minimum required power amount.

Similarly to at step S23, at step S37 the token request section 34B adds the allocated tokens to the second bucket 37B (118 in Fig. 24).

Then at step S38, the token request section 34B notifies the user that functioning (reception of television broadcasts in this case) of the power consuming appliance 30B is being limited (119 in Fig. 24). The token request section 34B then sets "being limited" as the "usage limitation status" item in the power usage planned value table 39B to indicate that there is a limitation in place on the usage of the power consuming appliance 30B, sets a usage limitation of the power consuming appliance 30B, and then processing proceeds to step S34. The usage limitation of the power consuming appliance 30B here may, for example, be setting the power of the power consuming appliance 30B to switch OFF after a specific period of time. The specific period of time may, for example, be calculated according to the following Equation (3).

$$\text{time until switching OFF the power of the power consuming appliances 30}$$
$$= (\text{already secured power amount - minimum required power amount}) / \text{power}$$
$$\text{consumption amount per unit time} \qquad \text{Equation (3)}$$

At step 39, the acquired token allocation amount is returned to the power management device 20 as surplus tokens.

Then at step S40 the token request section 34B notifies a user that functioning (reception of television broadcasts in this case) of the power consuming appliance 30B is being limited (use not possible). The token request section 34B then sets "being limited" as the "usage limitation status" item in the power usage planned value table 39B and then ends the token request processing B.

When activation time of the power consumption continuation determination processing B scheduled at step S35 has arrived, the power consumption continuation determination processing B illustrated in Fig. 4 is executed.

At step S41, the power consumption control section 35B acquires the consumed amount of power of the power consuming section 32B from the measurement value of the power meter 33B.

Then, at step S42, the power consumption control section 35B acquires the already secured power amount from the already secured power amount table 38B, subtracts the consumed power amount therefrom, and sets the subtraction result in the already secured power amount table 38B. Namely, tokens equivalent to the consumed power amount are subtracted from the second bucket 37B (120 in Fig. 23 and 121 in Fig. 24).

Then similarly to at step S31, at step S43 the token request section 34B notifies the power management device 20 with a token request (122 of Fig. 23 or 123 of Fig. 24). In this case the amount of tokens required to fill the second bucket 37B are requested.

Then similarly to at step S33, at step S44 the token request section 34B acquires a token allocation amount (124 of Fig. 23 or 125 of Fig. 24). The tokens allocated to the token request section 34B are added to the second bucket 37B (126 of Fig. 23 or 127 of Fig. 24).

Then similarly to at step S32, at step S45, the token request section 34B determines whether or not the token allocation amount is the token request amount or greater. Processing proceeds to step S46 if the token allocation amount is the token request amount or greater, and processing proceeds to step S49 if the token request amount is less than the token request amount.

At step S46, the token request section 34B refers to the setting of "usage limitation status" of the already secured power amount table 38B, and determines whether or not usage of the power consuming appliance 30B is being limited. Processing proceeds to step S47 if usage of the power consuming appliance 30B is being limited, and processing proceeds to step S48 if usage of the power consuming appliance 30B is not being limited.

At step S47, the token request section 34B notifies the user that limitation has been lifted. The token request section 34B also changes the "usage limitation status" of the already secured power amount table 38B to "not being limited", and also lifts the usage limitation set for the power consuming appliance 30B.

Then similarly to at step S35, at step S48 the token request section 34B schedules activation of the power consumption continuation determination processing B, and ends the power consumption continuation determination processing B.

At step S49, similarly to at step S36, the token request section 34B determines whether or not the token allocation amount is the minimum required power amount or greater. Processing proceeds to step S50 if the token allocation amount is the minimum required power amount or greater, and processing proceeds to step S51 if the token allocation amount is less than the minimum required power amount.

Similarly to at step S38, at step S50, the token request section 34B notifies a user that functioning (reception of television broadcasts in this case) of the power consuming appliance 30B is being limited (119 in Fig. 24). The token request section 34B then sets a usage limitation of the power consuming appliance 30B (switching power OFF after a specific period of time). Processing then proceeds to step S48.

However, at step S51, the token request section 34B notifies the user that functioning (reception of television broadcasts in this case) of the power consuming appliance 30B is being limited (use not possible) (119 in Fig. 24). Then after the remaining already secured power amount has been consumed by the power consumption control section 35B, the token request section 34B switches the power of the power consuming appliance 30B OFF, and ends the power consumption continuation determination processing B.

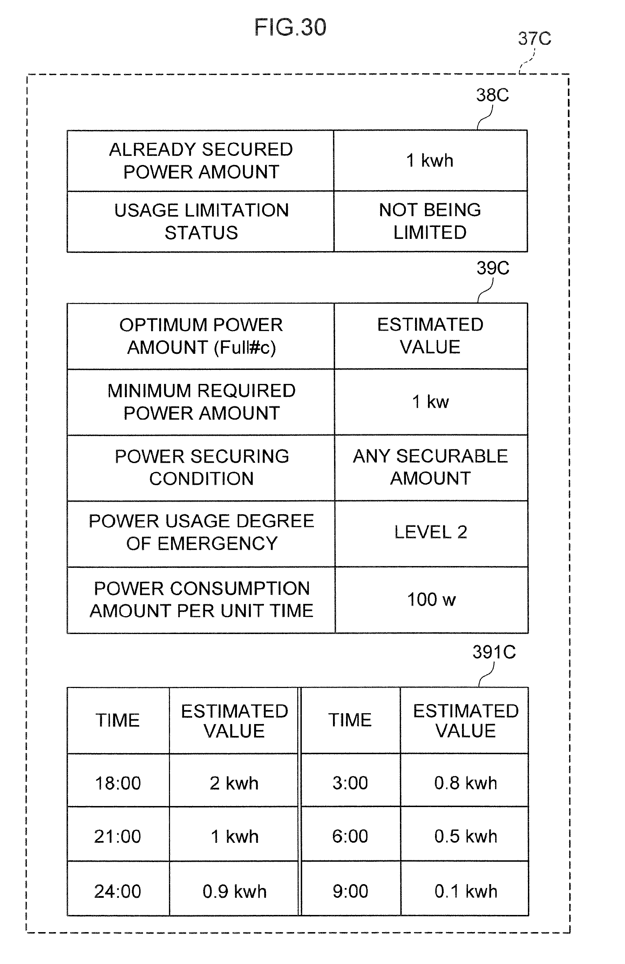

When start of usage of the power consuming appliance 30C is instructed by a user (such as by power introduction) (129 of Fig. 25 or 130 of Fig. 26), the token request processing C illustrated in Fig. 15 is started. Note that processing similar to that of the token request processing B is indicate with the same reference numerals, and detailed explanation thereof is omitted. The second bucket 37C of the power consuming appliance 30C is stored with the already secured power amount table 38C, the power usage planned value table 39C, and a power estimated value table 391C as illustrated in Fig. 30.

At step S61, the token request section 34C acquires the current time stamp.

Then at step S62, the token request section 34C estimates the amount of power that will be consumed from the current time until the end of use of the power consuming appliance 30C (131 in Fig. 25 or 132 in Fig. 26). A value of the power estimated value table 391C is employed in the estimation. The power estimated value table 391C illustrated in Fig. 30 specifies predetermined amounts of power consumed from the time specified by the "time" until usage end times of the power consuming appliance 30C (for example 10:00) in the column of "estimated value".

Then similarly to at step S31, at step S63, the token request section 34C notifies a token request to the power management device 20 (133 of Fig. 25 or 134 of Fig. 26). The token request amount requested here is a value of the estimated power amount at step S62 from which the already secured power amount has been subtracted.

Subsequently, processing similar to that of steps S32 to S40 of the token request processing B illustrated in Fig. 13 is executed, and then the token request processing C is ended. However, activation scheduling of step S35 is performed by the power consumption continuation determination processing C.

When the activation time of the power consumption continuation determination processing C scheduled at step S35 has arrived, the power consumption continuation determination processing C illustrated in Fig. 16 is executed. Note that similar processing to that of the power consumption continuation determination processing B is allocated the same reference numbers and detailed explanation is omitted thereof.

After passing through steps S41 and S42, at step S65 the token request section 34C acquires the current time stamp.

Then similarly to at step S62, at step S66 the token request section 34C estimates the amount of power that will be consumed from the current time to end of use of the power consuming appliance 30C (135 in Fig. 26).

Then similarly to at step S63, at step S67 the token request section 34C notifies the power management device 20 with a token request (136 of Fig. 26). The token request amount requested here is a value of the estimated power amount at step S66 from which the already secured power amount has been subtracted.

Subsequently processing similar to that of steps S44 to S51 of the token request processing B illustrated in Fig. 14 is performed, and then the power consumption continuation determination processing C is ended. The scheduling of activation at step S48 is performed by the power consumption continuation determination processing C.

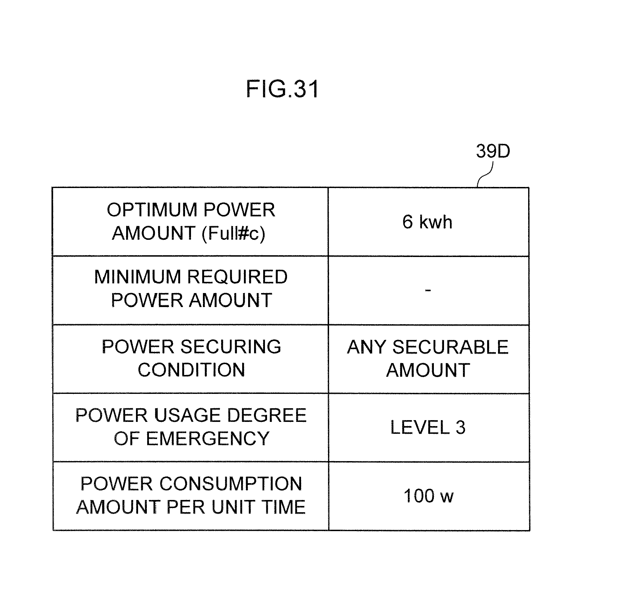

When start of usage of the power consuming appliance 30D is instructed by a user (such as by power introduction) (137 of Fig. 27 or 138 of Fig. 28), then the token request processing D illustrated in Fig. 17 is started. Note that processing similar to that of the token request processing A is indicated with the step numbers of the token request processing A illustrated in Fig. 12, and detailed explanation thereof is omitted. The power usage planned value table 39D stored in the second bucket 37D of the power consuming appliance 30D is illustrated in Fig. 31.

Similarly to at step S21, at step S71 the token request section 34D notifies a token request to the power management device 20 (139 of Fig. 27 or 140 of Fig. 28).

Then similarly to at step S22, at step S72 the token request section 34D acquires a token allocation amount (141 of Fig. 27 or 142 of Fig. 28). Then similarly to at step S23, the token request section 34D adds the allocated tokens to the second bucket 37D (143 of Fig. 27 or 144 of Fig. 28).

Then at step S73 the token request section 34D determines whether or not the second bucket 37D is full. Specifically, the token request section 34D acquires the already secured power amount from the already secured power amount table 38D, and acquires the optimum power amount (Full#c) from the power usage planned value table 39D. Determination is then performed as to whether or not the already secured power = the optimum power amount (Full#c). Processing proceeds to step S74 if the already secured power amount = the optimum power amount (Full#c), and processing proceeds to step S76 if the already secured power amount ≠ the optimum power amount (Full#c).

Similarly to at step S24, at step S74, the token request section 34D notifies the power consumption control section 35D that usage of the power consuming appliance 30D has started.

Then at step S75, the token request section 34D schedules activation of the power consumption continuation determination processing D, and ends the token request processing D. Time until activation of the power consumption continuation determination processing D may be calculated by the following Equation (4).

Time until activation of the power consumption continuation determination processing D

$$= \text{Max} \left( (\text{already secured power amount}/3 \times \text{power consumption amount per unit time}), 1 \text{ minute} \right) \qquad \text{Equation (4)}$$

Note that the power consumption amount per unit time employs a value stored in the power usage planned value table 39D.

At step S76, the token request section 34D notifies the user that functioning (in this case chilled storage) of the power consuming appliance 30D is being limited (145 in Fig. 24). The token request section 34D sets "being limited" as the "usage limitation status" item in the power usage planned value table 39D to indicate that usage of the power consuming appliance 30D is being limited, sets usage limitation of the power consuming appliance 30D, and then processing proceeds to step S74. The usage limitation of the power consuming appliance 30D may, for example, be to set a limitation to opening and closing the door of the power consuming appliance 30D (the refrigerator).

When the activation time of the power consumption continuation determination processing D scheduled at step S75 has arrived, the power consumption continuation determination processing D illustrated in Fig. 18 is executed. Note that similar processing to that of the power consumption continuation determination processing B illustrated in Fig. 14 is allocated the same reference numbers and detailed explanation is omitted thereof.

After passing through steps S41 to S44, at step S77 the token request section 34D, similarly to at step S73, determines whether or not the second bucket 37D is full. Processing proceeds to step S78 if full, and processing proceeds to step S81 if not full.

Similarly to at step S46, at step S78, the token request section 34D determines whether or not usage of the power consuming appliance 30D is being limited. Processing proceeds to step S79 if usage of the power consuming appliance 30D is being limited, and processing proceeds to step S80 if usage of the power consuming appliance 30D is not being limited.

Similarly to at step S47, at step S79 the token request section 34D notifies the user that limitation has been lifted (146 of Fig. 28). The token request section 34D then changes the "usage limitation status" of the already secured power amount table 38D to "not being limited", and lifts the usage limitation set for the power consuming appliance 30D.

Then similarly to at step S75, at step S80 the token request section 34D schedules activation of the power consumption continuation determination processing D, and ends the power consumption continuation determination processing D.

Similarly to at step S76, at step S81 the token request section 34D notifies the user that functioning (in this case chilled storage) of the power consuming appliance 30D is being limited (limitation on opening or closing the door), and then processing proceeds to step S80.

In the power management device 20, the token allocation process illustrated in Fig. 19 is executed when the token request is received from the power consuming appliance 30.

At step S101, the token allocation section 22 acquires the power usage level value from the power usage level value table 26.

Then at step S102, the token allocation section 22 determines a limit value according to the power usage degree of emergency contained in the received token request, with reference to the power usage planned value table 27.

Then at step S103, the token allocation section 22 subtracts the token request amount from the power usage level value acquired at step S101.

Then at step S104, the token allocation section 22 determines whether or not the subtraction result at step S103 is the limit value determined at step S102 or greater.

Processing proceeds to step S05 if the subtraction result is the limit value or greater (the cases of 147 in Fig. 22, and Fig. 23, Fig. 25, and Fig. 27). Processing proceeds to step S108 if the subtraction result is less than the limit value (the cases of 148 in Fig. 22, and Fig. 24, Fig. 26, and Fig. 28).

At step S105, the token allocation section 22 sets the subtraction result of step S103 in the power usage level value table 26 (149 in Fig. 22, 150, 151, 152 in Fig. 23, 153, 154 in Fig. 25, and 156, 157 in Fig. 27). Then at step S106, the token allocation section 22 sets the "token request amount" for the token allocation amount allocated to the power consuming appliances 30. Then at step S107, the token allocation section 22 notifies the power consuming appliances 30 of the set token allocation amount, and ends the token allocation processing.

At step S108, the token allocation section 22 determines whether or not the power securing condition contained in the token request is "total amount all at once". Processing proceeds to step S 109 if "total amount all at once" (the case in Fig. 22), and processing proceeds to step S110 if not "total amount all at once", namely if "any securable amount" (the cases of Fig. 24, Fig. 26, and Fig. 28).

At step S109, the token allocation section 22 sets the token allocation amount to "0", and processing proceeds to step S107.

At step S110, the token allocation section 22 sets the limit value determined at step S102 as the power usage level value of the power usage level value table 26 (158, 159 in Fig. 24, 160 in Fig. 26, and 161, 162 in Fig. 28). Then at step S111, the token allocation section 22 sets the token allocation amount as the value of the power usage level value acquired at step S101 from which the limit value determine at step S102 has been subtracted, and processing proceeds to step S107.

The power consumption and token return processing illustrated in Fig. 20 is executed when the start of usage of the power consuming appliances 30 is notified to the power consumption control section 35 by the token request section 34 of the power consuming appliances 30.

At step S121, the power consumption control section 35 acquires the amount of power consumed by the power consuming section 32 from the measurement value of the power meter 33.

Then at step S122, the power consumption control section 35 acquires the already secured power amount from the already secured power amount table 38, subtracts the amount of power consumed, and sets the result as the already secured power amount table 38. Namely, tokens equivalent to the amount of power consumed are subtracted from the second bucket 37.

Then at step S123, the power consumption control section 35 acquires the already secured power amount from the already secured power amount table 38 and determines whether or not the already secured power amount is 0. Processing proceeds to step S125 if the already secured power amount is 0, and processing proceeds to step S124 if the already secured power amount is greater than 0. Note that there is no limitation to determination as to whether or not the already secured power amount is 0, and determination may be made as to whether or not the already secured power amount is a specific threshold value or lower.

At step S124, the power consumption control section 35 determines whether or not an instruction has been received from a user to stop usage of the power consuming appliances 30. Processing proceeds to step S125 if an instruction to stop usage has been received, and processing proceeds to step S121 if no such instruction has been received.

At step 125, the power consumption control section 35 is controlled so as to stop operation of the power consuming section 32.

Then, at step S126, the token return section 36 acquires the already secured power amount from the already secured power amount table 38, and returns the acquired already secured power amount to the power management device 20 as surplus tokens. When the surplus tokens have been returned, the token return section 36A sets the already secured power amount of the already secured power amount table 38 to "0", and ends the power consumption and token return processing.

When the returned surplus tokens have been received by the power management device 20 from the power consuming appliances 30, the token reception processing illustrated in Fig. 21 is executed.

At step S131, the token reception section 23 acquires a power usage level value from the power usage level value table 26, and adds to this the token return amount of received surplus tokens. Then at step S132, the token reception section 23 sets the addition result of step 131 in the power usage level value table 26. Namely, the surplus tokens returned from the power consuming appliances 30 are returned to the first bucket 25, and the token return processing is ended.

As explained above, according to the power management system 10 of the present exemplary embodiment, in the power management device 20, tokens are gradually added to the first bucket 25. Then, at the point in time at which a request is received from the power consuming appliance 30, the tokens accumulated in the first bucket 25 are allocated to the power consuming appliance 30. Therefore, due to there being no ends of periods in which a target power amount is allocated, and no boundaries between periods, there is no inconvenience incurred by not being able to use the power consuming appliance 30 at the end of a period, or in the vicinity of the boundary between periods.

Moreover, due to the tokens accumulated in the first bucket 25 gradually being added to, there is no allocation of power to each of the power consuming appliances 30 at an amount greatly exceeding the predicted amount at the point in time when power is consumed by the power consuming appliances 30. Consequently, in the long run this enables the total amount of power consumed by the power consuming appliances 30 to be limited to the planned value or lower.

Moreover, returning the surplus tokens generated in each of the power consuming appliances 30 to the first bucket 25 enables efficient power sharing.

When tokens are requested by the power consuming appliances 30, as conditions for token allocation, setting may be made to secure the total amount of the token request amount all at once, or to secure the securable token amount even if less than the token request amount. In the former case, in an appliance that will not complete a specific operation if power supply is interrupted during operation of the appliance, such as for example for a rice cooker, an inconvenient situation such as forcibly ending partway through operation can be avoided. The latter case enables flexible power sharing to be achieved.

Due to changing the limit value of the first bucket 25 according to the usage degree of emergency of the power consuming appliances 30, the advantageous effect is exhibited of suppressing token allocation to a power consuming appliance 30 having a low usage degree of emergency when there is an power consuming appliance 30 present that has a high usage degree of emergency. Thus, even without provision of a specific processing such as, for example, for exchanging messages between the power consuming appliances 30, power sharing processing is enabled that prioritizes power to one or other of the power consuming appliances 30.

Note that although explanation has been given in the present exemplary embodiment of a case in which token inflow processing by the token inflow section 21 is executed at each specific activation time, there is no limitation to. For example, as a first modified example, the average tokens may be in-flowed to the first bucket 25 when tokens are allocated to the power consuming appliances 30 and when surplus tokens are received.

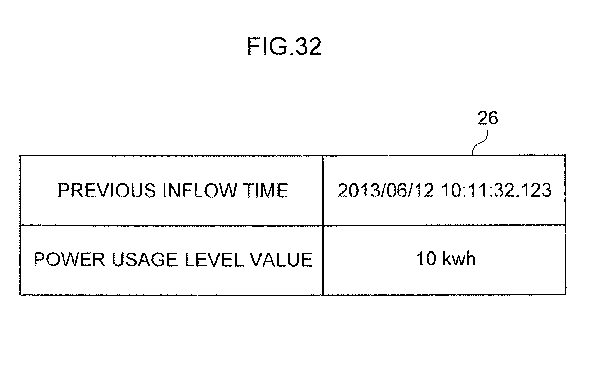

A power usage level value table 26 of the first modified example is illustrated in Fig. 32. An additional item "previous inflow time stamp", stored with the time when the average tokens flowed into the first bucket 25, is added to the power usage level value table 26 of the first modified example.

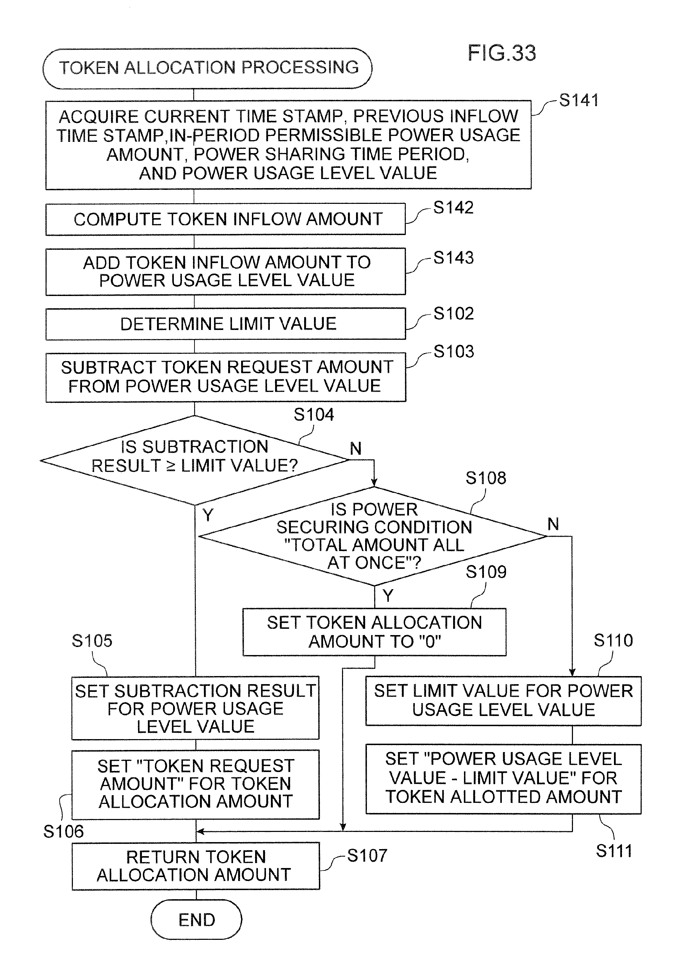

Token allocation processing in the first modified example is illustrated in Fig. 33. Note that processing similar to the token allocation processing illustrated in Fig. 19 is allocated the same reference numbers and detailed explanation is omitted thereof.

At step S 141, the token inflow section 21 acquires the current time stamp. Then the token inflow section 21 acquires the previous inflow time stamp and the power usage level value from the power usage level value table 26 of the first bucket 25. The token inflow section 21 also acquires the in-period permissible power usage amount (WH) and the power sharing time period (T) from the power usage planned value table 27 of the first bucket 25.

Then at step S 142, the token inflow section 21 computes the token inflow amount, for example according to the following Equation (5).

$$\text{Token inflow amount} = (\text{current time stamp} - \text{previous inflow time stamp}) \times (\text{WH/T})$$

$$\text{Equation (5)}$$

Then at step S 143, the token inflow section 21 acquires the power usage level value from the power usage level value table 26 of the first bucket 25, and at adds the token inflow amount computed at step S 142, and sets the sum in the power usage level value table 26. The time stamp at this time is stored in the power usage level value table 26 as the previous inflow time stamp.

Subsequently processing similar to that of the token allocation process of the above exemplary embodiment illustrated in Fig. 19 is executed by the processing of steps S102 to S111.

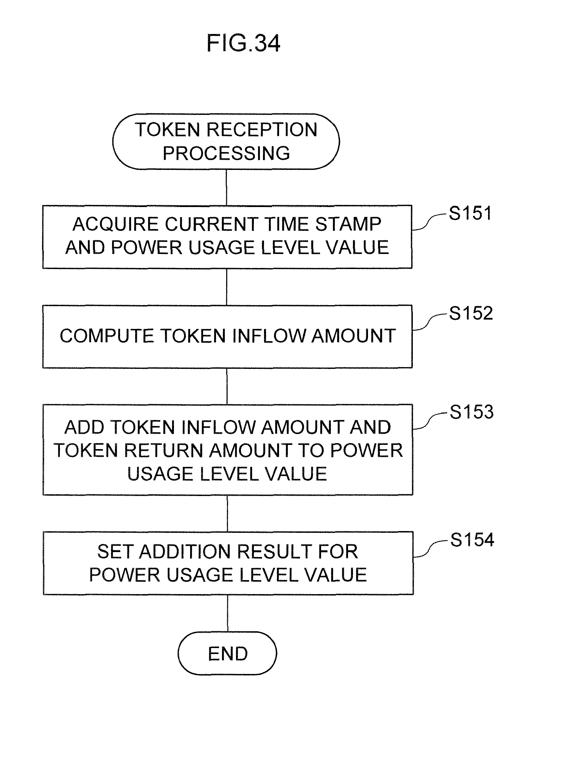

The token request processing in the first modified example is illustrated in Fig. 34.

Similarly to at steps S141 and S142, at steps S151 and S152, the token inflow section 21 computes the token inflow amount.

Then at step S153, the token inflow section 21 acquires the power usage level value from the power usage level value table 26 of the first bucket 25. The token inflow section 21 then adds the token inflow amount computed at step S 152 to the token return amount of the surplus tokens received, and sets this in the power usage level value table 26. The time stamp of this time is stored in the power usage level value table 26 as the previous inflow time stamp, and the token reception processing is ended.

In the first modified example there is no need to execute the token inflow processing illustrated in Fig. 11. Thus the first modified example enables a reduction in processing load to be achieved.

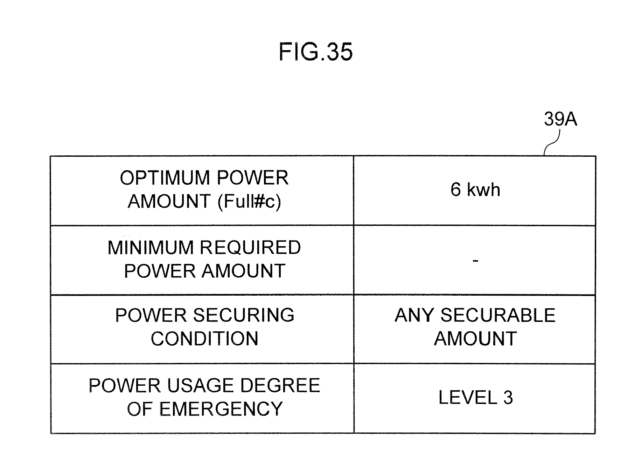

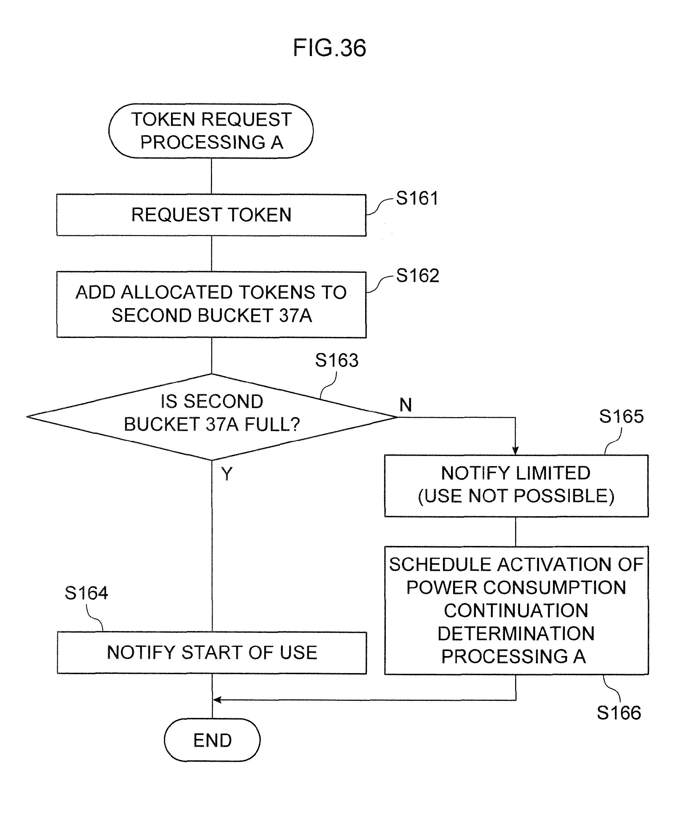

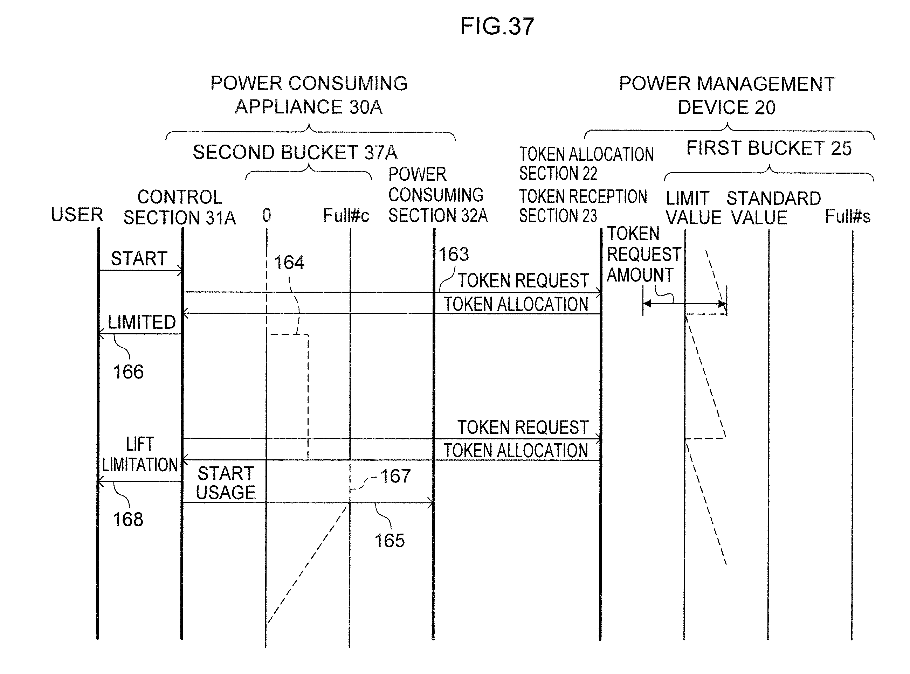

Explanation has been given in the above exemplary embodiment of a case in which "total amount all at once" is set as the power securing condition for requesting tokens from the power consuming appliance 30A, however there is no limitation to. For example, as a second modified example, "any securable amount" may be set as the power securing condition when requesting tokens from the power consuming appliance 30A. A power usage planned value table 39A of the power consuming appliance 30A of the second modified example is illustrated in Fig. 35. A sequence diagram for the token request processing A of Fig. 36 for the second modified example is illustrated in Fig. 37.

At step S161 of the token request processing A illustrated in Fig. 36, similarly to at step S21, the token request section 34A notifies the power management device 20 with a token request (163 in Fig. 37). Then, at step S162, similarly to at step S23, the token request section 34A adds the allocated tokens to the second bucket 37A (164 of Fig. 37).

Then at step S 163, the token request section 34A determines whether or not the second bucket 37A is full. Processing proceeds to step S164 if full, and processing proceeds to step S 165 if not full.

Similarly to at step S24, at step S164 the token request section 34A notifies the power consumption control section 35A of start of usage of the power consuming appliance 30A.

At step S165, the token request section 34A notifies the user that functioning (in this case rice cooking) of the power consuming appliance 30A is being limited (use not possible), (166 in Fig. 37). The token request section 34A then sets "being limited" as the "usage limitation status" item in the power usage planned value table 39A.

Then, at step S166, the token request section 34A schedules activation of the power consumption continuation determination processing A, and ends the token request processing A. The time until activation of the power consumption continuation determination processing A may, for example, be 1 minute.

The power consumption continuation determination processing A is executed when the activation time of the power consumption continuation determination processing A scheduled at step S166 has arrived. The consumption continuation determination processing A is similar to the token request processing A. Even if the second bucket 37A is not full at the first time of token request, the second bucket 37A becomes full (167 in Fig. 37) when the token request processing is repeated plural times. "Being limited" is then lifted, (168 of Fig. 37) and usage of the power consuming appliance 30A is started (165 of Fig. 37).

According to the second modified example, for an appliance such as, for example, a rice cooker, in which a specific operation is not completed if power supply is interrupted during operation of the appliance, operation of the power consuming appliance 30A can be started as soon as an amount of power to complete the specific operation has been secured.

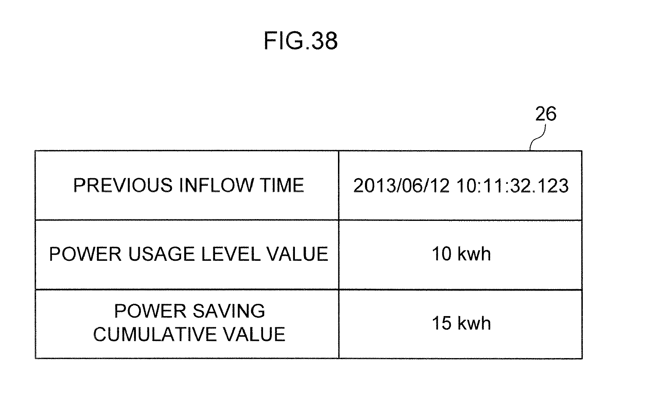

As a third modified example, any tokens overflowing from the first bucket 25 may be stored as a power saving cumulative value. A power usage level value table 26 in the third modified example is illustrated in Fig. 38. In the third modified example, the power saving cumulative value is computed, for example, after tokens have flowed into the first bucket 25, and after surplus tokens have been returned, and this it then set as the "power saving cumulative value" in the power usage level value table 26.

The power saving cumulative value may, for example, be computed according to the following Equation (6).

$$
\begin{aligned}
\text{power saving cumulative value} = \\
\text{power saving cumulative value} + \text{token inflow amount} + \text{token return amount} + \text{power usage} \\
\text{level value} - \text{Min (token inflow amount} + \text{token return amount} + \text{power usage level value,} \\
\text{carry-forward permitted power amount)} \qquad \text{Equation (6)}
\end{aligned}
$$

The third modified example enables the consciousness of a user to energy saving and cost saving to be raised.

As described above, explanation has been given of a mode in which the power management program 50 and the control program 70 are pre-stored (installed) on the storage section 46 and the storage section 66, however it is possible to provide the power management program 50 and the control program 70 in a format recorded on a recording medium, such as a CD-ROM or DVD-ROM.

## Claims

1. A power management device comprising:

   an incrementing section (21) that gradually increases a power-equivalent value that is equivalent to an amount of permitted power consumption by a plurality of power consuming appliances and that is accumulated in a management accumulation section; and
   an allocation section (22) that, according to requests from each of the plurality of power consuming appliances, allocates the power-equivalent value accumulated in the management accumulation section to each of the plurality of power consuming appliances within a range such that the power-equivalent value does not become a predetermined limit value or lower.

2. The power management device of claim 1, wherein:

   the incrementing section gradually increases the power-equivalent value by a value obtained by dividing an estimated value, of a total amount of power to be consumed during a specific time period by the plurality of power consuming appliances, by the specific time period.

3. The power management device of claim 1 or claim 2, further comprising:

a receiving section (23)that receives a surplus power-equivalent value returned from each of the plurality of power consuming appliances, which is equivalent to an amount of power remaining among the power amounts equivalent to the power-equivalent values allocated to each of the plurality of power consuming appliances after consumption of power in each of the power consuming appliances has finished.

4. The power management device of any one of claim 1 to claim 3, wherein, in cases in which a request from the power consuming appliance includes a condition of allocating a total amount of a requested power-equivalent value all at once, the allocation section does not allocate the power-equivalent value to the power consuming appliance if a value obtained by subtracting the limit value from the power-equivalent value accumulated in the management accumulation section is less than the power-equivalent value requested by the power consuming appliance.

5. The power management device of any one of claim 1 to claim 4, wherein, in cases in which a request from the power consuming appliance includes a condition of allocating any power-equivalent value capable of being allocated from out of a requested power-equivalent value, if a value obtained by subtracting the limit value from the power-equivalent value accumulated in the management accumulation section is less than a power-equivalent value requested by the power consuming appliance, the allocation section allocates the value obtained by subtraction to the power consuming appliance.

6. The power management device of any one of claim 1 to claim 5, wherein the allocation section varies the limit value according to a degree of emergency of the request from the power consuming appliance.

7. A power management method comprising:

by a processor, gradually increasing a power-equivalent value that is equivalent to an amount of permitted power consumption by a plurality of power consuming appliances and that is accumulated in a management accumulation section; and
by the processor, according to requests from each of the plurality of power consuming appliances, allocating the power-equivalent value accumulated in the management accumulation section to each of the plurality of power consuming appliances within a range such that the power-equivalent value does not become a predetermined limit value or lower.

8. The power management method of claim 7, wherein:

when gradually increasing the power-equivalent value, the power-equivalent value is gradually increased by a value obtained by dividing an estimated value, of a total amount of power to be consumed during a specific time period by the plurality of power consuming appliances, by the specific time period.

9. The power management method of claim 7 or claim 8, further comprising:

receiving a surplus power-equivalent value returned from each of the plurality of power consuming appliances, which is equivalent to an amount of power remaining among the power amounts equivalent to the power-equivalent values allocated to each of the plurality of power consuming appliances after consumption of power in each of the power consuming appliances has finished.

10. The power management method of one of claim 7 to claim 9, wherein
when allocating the power-equivalent values to each of the plurality of power consuming appliances, in cases in which a request from the power consuming appliance includes a condition of allocating a total amount of a requested power-equivalent value all at once, allocation of the power-equivalent value is not made to the power consuming appliance if a value obtained by subtracting the limit value from the power-equivalent value accumulated in the management accumulation section is less than the power-equivalent value requested by the power consuming appliance.

11. The power management method of one of claim 7 to claim 10, wherein
when allocating the power-equivalent values to each of the plurality of power consuming appliances, in cases in which a request from the power consuming appliance includes a condition of allocating any power-equivalent value capable of being allocated from out of a requested power-equivalent value, if a value obtained by subtracting the limit value from the power-equivalent value accumulated in the management accumulation section is less than a power-equivalent value requested by the power consuming appliance, then the value obtained by subtraction is allocated to the power consuming appliance.

12. The power management method of one of claim 7 to claim 11, wherein
when allocating the power-equivalent values to each of the plurality of power consuming appliances, the limit value varies according to a degree of emergency of the request from the power consuming appliance.

13. A power management program that causes a computer to execute processing, the processing comprising:

gradually increasing a power-equivalent value that is equivalent to an amount of permitted power consumption by a plurality of power consuming appliances and that is accumulated in a management accumulation section; and
according to requests from each of the plurality of power consuming appliances, allocating the power-equivalent value accumulated in the management accumulation section to each of the plurality of power consuming appliances within a range such that the power-equivalent value does not become a predetermined limit value or lower.

14. A power consuming appliance comprising:

a request section that requests a power-equivalent value equivalent to an amount of power to be consumed by a power consuming section from a power management device that manages an amount of power to be consumed by a plurality of power consuming appliances, and that accumulates in an appliance accumulation section a power-equivalent value allocated from the power management device;
a control section that subtracts, from the power-equivalent value accumulated in the appliance accumulation section, according to the amount of power that has been consumed by the power consuming section, and that controls so as to stop consumption of power if the power-equivalent value accumulated in the appliance accumulation section is a specific value or lower; and
a return section that returns to the power management device a surplus power-equivalent value accumulated in the appliance accumulation section after power consumption by the power consuming section has finished.

15. A power management system comprising:

a power management device including
an incrementing section that gradually increases a power-equivalent value that is equivalent to an amount of permitted power consumption by a plurality of power consuming appliances and that is accumulated in a management accumulation section,
an allocation section that, according to requests from each of the plurality of power consuming appliances, allocates the power-equivalent value accumulated in the management accumulation section to each of the plurality of power consuming appliances within a range such that the power-equivalent value does not become a predetermined limit value or lower, and
a reception section that receives a surplus power-equivalent value returned from each of the plurality of power consuming appliances, which is equivalent to an amount of power remaining from out of the power amounts equivalent to the power-equivalent values allocated to each of the plurality of power consuming appliances after consumption of power in each of the power consuming appliances has finished; and
a power consuming appliance including
a request section that requests a power-equivalent value equivalent to an amount of power to be consumed by a power consuming section from the power management device, and that accumulates in an appliance accumulation section a power-equivalent value allocated from the power management device,
a control section that subtracts, from the power-equivalent value accumulated in the appliance accumulation section, according to the amount of power that has been consumed by the power consuming section, and that controls the power consuming section so as to stop the consumption of power if the power-equivalent value accumulated in the appliance accumulation section is a specific value or lower, and
a return section that returns to the power management device the surplus power-equivalent value accumulated in the appliance accumulation section after power consumption by the power consuming section has finished.

## FIG.1

FIG.2

# FIG.3

FIG.4

AVERAGE
TOKENS

SURPLUS
TOKENS

25

CARRY-
FORWARD
PORTION

CARRY-FORWARD
PERMITTED POWER
AMOUNT (Full#s)

STANDARD VALUE

ADVANCE
PORTION

POWER USAGELEVEL VALUE

LIMIT VALUE

37A

37B

37C

37D

| POWER CONSUMING APPLIANCE | POWER CONSUMING APPLIANCE | POWER CONSUMING APPLIANCE | POWER CONSUMING APPLIANCE |
|---|---|---|---|
| 30A | 30B | 30C | 30D |

FIG.5

POWER
AMOUNT

TOTAL
USABLE
AMOUNT

BOUNDARY BETWEEN
PERIODS

CURRENT PERIOD

NEXT PERIOD

TOTAL USED
AMOUNT

TIME WHEN RICE COOKER
CANNOT BE USED

CURRENT PERIOD'S
WORTH USED UP

t

# FIG.6

AMOUNT OF POWER
REQUIRED UNTIL
RICE COOKING FINISHED

BOUNDARY BETWEEN
PERIODS

POWER
AMOUNT

CURRENT PERIOD

NEXT PERIOD

TOTAL
USABLE
AMOUNT

TOTAL USED
AMOUNT

t

TIME WHEN RICE COOKING
CANNOT BE STARTED

# FIG.7

25

26

| POWER USAGE LEVEL VALUE | 10 kwh |
|---|---|

27

| IN-PERIOD PERMISSIBLE POWER USAGE AMOUNT (WH) | | 24 kwh |
|---|---|---|
| POWER SHARING TIME PERIOD (T) | | 1 DAY (=24 hours × 60 minutes × 60 seconds) |
| CARRY-FORWARD PERMITTED POWER AMOUNT (Full#s) | | 20 kwh |
| LIMIT VALUE | LEVEL 1 | -24 kwh |
| | LEVEL 2 | -28 kwh |
| | LEVEL 3 | -30 kwh |

# FIG.8

37A

38A

| ALREADY SECURED POWER AMOUNT | 1 kwh |
|---|---|
| USAGE LIMITATION STATUS | NOT BEING LIMITED |

39A

| OPTIMUM POWER AMOUNT (Full#c) | 6 kwh |
|---|---|
| MINIMUM NECESSARY POWER AMOUNT | - |
| POWER SECURING CONDITION | TOTAL AMOUNT ALL AT ONCE |
| POWER USAGE DEGREE OF EMERGENCY | LEVEL 1 |

FIG.9

EP 2 869 250 A1

FIG.10

60

62
CPU

67
INPUT-
OUTPUT I/F

68
NETWORK I/F

69

70
STORAGE SECTION

CONTROL PROGRAM

TOKEN REQUEST PROCESS
74

POWER CONSUMPTION
SECTION CONTROL PROCESS
75

TOKEN RETURN PROCESS
76

SECOND BUCKET
STORAGE REGION
77

MEMORY

64

66

27

FIG.11

```
        ┌─────────────────────┐
        │    TOKEN INFLOW     │
        │    PROCESSING      │
        └─────────────────────┘
                  │
        ┌─────────────────────┐  ┌── S11
        │   COMPUTE TOKEN     │
        │   INFLOW AMOUNT     │
        └─────────────────────┘
                  │
        ┌─────────────────────┐  ┌── S12
        │ ADD TOKEN INFLOW AMOUNT TO │
        │ POWER USAGE LEVEL VALUE │
        └─────────────────────┘
                  │
        ┌─────────────────────┐
        │        END          │
        └─────────────────────┘
```

FIG.12

TOKEN REQUEST
PROCESSING A

REQUEST TOKEN — S21

IS TOKEN
ALLOCATION AMOUNT ≥
TOKEN REQUEST
AMOUNT? — S22

N

Y

S23

ADD ALLOCATED TOKENS TO
SECOND BUCKET 37A

NOTIFY USAGE START

S24

S25

NOTIFY AND SET LIMITED
(USE NOT POSSIBLE)

END

EP 2 869 250 A1

# FIG.13

TOKEN REQUEST
PROCESSING B

REQUEST TOKENS — S31

IS TOKEN
ALLOCATION AMOUNT ≥
TOKEN REQUEST
AMOUNT? — S32

N

Y

IS TOKEN
ALLOCATION AMOUNT ≥
MINIMUM REQUIRED
POWER AMOUNT? — S36

N

Y

ADD ALLOCATED TOKENS
TO SECOND BUCKET 37B — S37

NOTIFY AND SET LIMITED
(USE NOT POSSIBLE) — S38

S33

ADD ALLOCATED TOKENS TO
SECOND BUCKET 37B

RETURN ALLOCATED
TOKENS — S39

NOTIFY USAGE START — S34

NOTIFY AND SET LIMITED
(USE NOT POSSIBLE)

S40

SCHEDULE ACTIVATION
OF POWER CONSUMPTION
CONTINUATION DETERMINATION
PROCESSING B — S35

END

30

FIG.14

POWER CONSUMPTION
CONTINUATION DETERMINATION
PROCESSING B

ACQUIRE AMOUNT OF
POWER CONSUMED ⟋S41

SUBTRACT TOKENS EQUIVALENT
TO POWER CONSUMPTION
FROM SECOND BUCKET 37B ⟋S42

REQUEST TOKENS ⟋S43

ADD ALLOCATED TOKENS TO
SECOND BUCKET 37B ⟋S44

S45

IS ALREADY
SECURED POWER AMOUNT ≥
TOKEN REQUEST
AMOUNT?
— N

Y

S46

BEING
LIMITED?
N

Y

S47

LIFT LIMITATION

S49

IS ALREADY
SECURED POWER AMOUNT ≥
MINIMUM REQUIRED POWER
AMOUNT?
— N

S50

Y

NOTIFY AND SET BEING
LIMITED (USAGE LIMITATION)

S51

SCHEDULE ACTIVATION OF
POWER CONSUMPTION
CONTINUATION
DETERMINATIONPROCESSING B

NOTIFY AND SET BEING LIMITED
(USAGE LIMITATION) AFTER
CONSUMPTION OF ALREADY
SECURED POWER AMOUNT

S48

END

FIG.15

```
        ┌──────────────────────┐
        │   TOKEN REQUEST      │
        │   PROCESSING C       │
        └──────────────────────┘
                  │
        ┌──────────────────────┐  ─S61
        │ ACQUIRE CURRENT TIME STAMP │
        └──────────────────────┘
                  │
        ┌──────────────────────┐  ─S62
        │ ESTIMATE AMOUNT OF POWER │
        │ CONSUMED UP TO END OF USE │
        └──────────────────────┘
                  │
        ┌──────────────────────┐  ─S63
        │   REQUEST TOKENS     │
        └──────────────────────┘
```

S32

IS TOKEN
ALLOCATION AMOUNT ≥
TOKEN REQUEST
AMOUNT?

N

Y

S36

IS TOKEN
ALLOCATION AMOUNT ≥
MINIMUM REQUIRED
POWER AMOUNT?

N

Y

ADD ALLOCATED TOKENS
TO SECOND BUCKET 37C   ─S37

NOTIFY AND SET BEING
LIMITED (USAGE LIMITATION)   ─S38

S33

ADD ALLOCATED TOKENS TO
SECOND BUCKET 37C

S39

RETURN ALLOCATED
TOKENS

NOTIFY USAGE START   ─S34

NOTIFY AND SET LIMITED
(USE NOT POSSIBLE)

SCHEDULE ACTIVATION OF
POWER CONSUMPTION
CONTINUATION DETERMINATION
PROCESSING C   ─S35

S40

END

FIG.16

POWER CONSUMPTION CONTINUATION
DETERMINATION PROCESSING C

ACQUIRE AMOUNT OF POWER CONSUMED — S41

SUBTRACT TOKENS EQUIVALENT TO POWER
CONSUMPTION FROM SECOND BUCKET 37C — S42

ACQUIRE CURRENT TIME STAMP — S65

ESTIMATE AMOUNT OF POWER
CONSUMED UP TO END OF USE — S66

REQUEST TOKENS — S67

ADD ALLOCATED TOKENS TO SECOND BUCKET 37C — S44

S45
IS ALREADY
SECURED POWER AMOUNT ≥
TOKEN REQUEST
AMOUNT?
N

Y

S46
BEING
LIMITED?
N

S49
IS ALREADY
SECURED POWER AMOUNT ≥
MINIMUM REQUIRED POWER
AMOUNT?
N

Y

Y

S50
NOTIFY AND SET BEING
LIMITED (USAGE LIMITATION)

S47
LIFT LIMITATION

SCHEDULE ACTIVATION OF
POWER CONSUMPTION
CONTINUATIONDETERMINATION
PROCESSING C

S51
NOTIFY AND SET BEING LIMITED
(USAGE LIMITATION) AFTER
CONSUMPTION OF ALREADY
SECURED POWER AMOUNT

S48

END

33

# FIG.17

TOKEN REQUEST
PROCESSING D

REQUEST TOKENS — S71

ADD ALLOCATED TOKENS TO
SECOND BUCKET 37D — S72

IS SECOND
BUCKET 37D FULL? — S73

N

S76

NOTIFY AND SET
BEING LIMITED
(USAGE LIMITATION)

Y

NOTIFY START OF USE — S74

SCHEDULE ACTIVATION OF
POWER CONSUMPTION
CONTINUATION DETERMINATION
PROCESSING D — S75

END

FIG.18

```
       ┌─────────────────────────────┐
       │    POWER CONSUMPTION        │
       │ CONTINUATION DETERMINATION  │
       │        PROCESSING D         │
       └─────────────────────────────┘
                     │
       ┌─────────────────────────────┐  S41
       │      ACQUIRE AMOUNT OF       │
       │      POWER CONSUMED          │
       └─────────────────────────────┘
                     │
       ┌─────────────────────────────┐  S42
       │  SUBTRACT TOKENS EQUIVALENT  │
       │  TO POWER CONSUMPTION FROM   │
       │     SECOND BUCKET 37D        │
       └─────────────────────────────┘
                     │
       ┌─────────────────────────────┐  S43
       │       REQUEST TOKENS         │
       └─────────────────────────────┘
                     │
       ┌─────────────────────────────┐  S44
       │     ADD ALLOCATED TOKENS     │
       │     TO SECOND BUCKET 37D     │
       └─────────────────────────────┘
                     │
              S77   ◇
          ╱ IS SECOND ╲         N
         ◇  BUCKET 37D  ◇──────────────┐
          ╲   FULL?    ╱                │
             ◇                          │
              │ Y      S78              │        S81
              ◇                         ▼
     N   ╱ BEING LIMITED? ╲   ┌─────────────────────┐
    ┌───◇                 ◇   │    NOTIFY AND SET    │
    │    ╲               ╱    │    BEING LIMITED     │
    │       ◇                 │  (USAGE LIMITATION)  │
    │        │ Y              └─────────────────────┘
    │  ┌─────────────────┐  S79        │
    │  │  LIFT LIMITATION │            │
    │  └─────────────────┘            │
    │        │                        │
    └────────┼────────────────────────┘
             ▼
   ┌─────────────────────────────┐  S80
   │    SCHEDULE ACTIVATION OF    │
   │      POWER CONSUMPTION       │
   │  CONTINUATION DETERMINATION  │
   │        PROCESSING D          │
   └─────────────────────────────┘
             │
          ┌──────┐
          │ END  │
          └──────┘
```

# FIG.19

```
        ( TOKEN ALLOCATION PROCESS )
                     │
                     ▼
   ┌──────────────────────────────────────┐  ⌐S101
   │ ACQUIRE POWER USAGE LEVEL VALUE        │
   └──────────────────────────────────────┘
                     │
                     ▼
   ┌──────────────────────────────────────┐  ⌐S102
   │        DETERMINE LIMIT VALUE           │
   └──────────────────────────────────────┘
                     │
                     ▼
   ┌──────────────────────────────────────┐  ⌐S103
   │ SUBTRACT TOKEN REQUEST AMOUNT          │
   │ FROM POWER USAGE LEVEL VALUE           │
   └──────────────────────────────────────┘
                     │
                     ▼
              S104
          IS SUBTRACTION                          IS POWER
          RESULT ≥ LIMIT ──N──►            SECURING CONDITION ──N──┐
             VALUE?                          "TOTAL AMOUNT ALL        │
                │                               AT ONCE"?    S108     │
                Y                                  │                  │
                │                                  Y  S109            │
                │                       ┌──────────────────────┐      │
                │                       │ SET TOKEN ALLOCATION  │      │
                │                       │    AMOUNT TO "0"       │      │
                │                       └──────────────────────┘      │
   S105         │                                  │                  ▼
   ┌────────────────────┐          ┌──────────────────────────┐  S110
   │ SET SUBTRACTION     │          │ SET LIMIT VALUE FOR POWER │
   │ RESULT FOR POWER    │          │   USAGE LEVEL VALUE       │
   │ USAGE LEVEL VALUE   │          └──────────────────────────┘
   └────────────────────┘                         │
             │                       ┌──────────────────────────┐
   ┌────────────────────┐            │ SET "POWER USAGE LEVEL    │
   │ SET "TOKEN REQUEST  │            │ VALUE - LIMIT VALUE" FOR  │
   │ AMOUNT" FOR TOKEN   │            │ TOKEN ALLOTTED AMOUNT     │
   │ ALLOCATION AMOUNT   │            └──────────────────────────┘
   └────────────────────┘                         │  S111
   S106     │◄──────────────────────────────────────┘
            ▼
   ┌────────────────────┐  ⌐S107
   │ RETURN TOKEN        │
   │ ALLOCATIONAMOUNT    │
   └────────────────────┘
            │
            ▼
         ( END )
```

## FIG.20

```
        ┌──────────────────────────┐
        │  POWER CONSUMPTION       │
        │  AND TOKEN RETURN        │
        │     PROCESSING           │
        └──────────────────────────┘
                    │
                    ▼◄─────────────────────────────────┐
        ┌──────────────────────────┐                   │
        │  ACQUIRE AMOUNT O         │  S121             │
        │  POWER CONSUMED           │                   │
        └──────────────────────────┘                   │
                    │                                   │
        ┌──────────────────────────┐                   │
        │  SUBTRACT TOKENS          │  S122             │
        │  EQUIVALENT TO AMOUNT     │                   │
        │  OF POWER CONSUMED        │                   │
        │  FROM SECOND BUCKET 37    │                   │
        └──────────────────────────┘                   │
                    │                                   │
              S123  ◇                                   │
             ╱ IS ALREADY  ╲    N                       │
            ◇ SECURED POWER  ◇──────────┐              │
             ╲ AMOUNT = 0? ╱     S124    │              │
                ╲     ╱               ▼   │              │
                 │ Y            ╱ STOP  ╲  N            │
                 │            ◇ USAGE?   ◇──────────────┘
                 │             ╲       ╱
                 │                │ Y
                 ▼◄───────────────┘
        ┌──────────────────────────┐
        │  STOP OPERATION OF POWER  │  S125
        │  CONSUMING SECTION 32     │
        └──────────────────────────┘
                    │
        ┌──────────────────────────┐
        │  RETURN SURPLUS TOKENS    │  S126
        └──────────────────────────┘
                    │
                ┌────────┐
                │  END   │
                └────────┘
```

# FIG.21

```
    ┌─────────────────────┐
    │  TOKEN RECEPTION    │
    │     PROCESSING      │
    └─────────────────────┘
              │
    ┌─────────────────────┐
    │ ADD TOKEN RETURN AMOUNT │──S131
    │ TO POWER USAGE LEVEL VALUE │
    └─────────────────────┘
              │
    ┌─────────────────────┐
    │ SET SUMMATION RESULT FOR │──S132
    │ POWER USAGE LEVEL VALUE │
    └─────────────────────┘
              │
         ┌─────────┐
         │   END   │
         └─────────┘
```

# FIG.22

POWER CONSUMING APPLIANCE 30A

POWER MANAGEMENT DEVICE 20

SECOND BUCKET 37A

FIRST BUCKET 25

USER | CONTROL SECTION 31A | 0 | Full#c | POWER CONSUMING SECTION 32A | TOKEN ALLOCATION SECTION 22 / TOKEN RECEPTION SECTION 23 | LIMIT VALUE | STANDARD VALUE | Full#s

START

100

START USAGE

FINISH USAGE

101

START

LIMITED

107

102 — TOKEN REQUEST
TOKEN ALLOCATION
106
104
TOKEN RETURN

103 — TOKEN REQUEST
TOKEN ALLOCATION
105

TOKEN REQUEST AMOUNT

147

149

148

EP 2 869 250 A1

# FIG.23

EP 2 869 250 A1

# FIG.24

EP 2 869 250 A1

# FIG.25

EP 2 869 250 A1

# FIG.26

EP 2 869 250 A1

# FIG.27

EP 2 869 250 A1

# FIG.28

EP 2 869 250 A1

# FIG.29

39B

| | |
|---|---|
| OPTIMUM POWER AMOUNT (Full#c) | 0.05 kwh |
| MINIMUM REQUIRED POWER AMOUNT | 1 kw |
| POWER SECURING CONDITION | ANY SECURABLE AMOUNT |
| POWER USAGE DEGREE OF EMERGENCY | LEVEL 2 |
| POWER CONSUMPTION AMOUNT PER UNIT TIME | 100 w |

## FIG.30

37C

38C

| ALREADY SECURED POWER AMOUNT | 1 kwh |
|---|---|
| USAGE LIMITATION STATUS | NOT BEING LIMITED |

39C

| OPTIMUM POWER AMOUNT (Full#c) | ESTIMATED VALUE |
|---|---|
| MINIMUM REQUIRED POWER AMOUNT | 1 kw |
| POWER SECURING CONDITION | ANY SECURABLE AMOUNT |
| POWER USAGE DEGREE OF EMERGENCY | LEVEL 2 |
| POWER CONSUMPTION AMOUNT PER UNIT TIME | 100 w |

391C

| TIME | ESTIMATED VALUE | TIME | ESTIMATED VALUE |
|---|---|---|---|
| 18:00 | 2 kwh | 3:00 | 0.8 kwh |
| 21:00 | 1 kwh | 6:00 | 0.5 kwh |
| 24:00 | 0.9 kwh | 9:00 | 0.1 kwh |

## FIG.31

39D

| | |
|---|---|
| OPTIMUM POWER AMOUNT (Full#c) | 6 kwh |
| MINIMUM REQUIRED POWER AMOUNT | - |
| POWER SECURING CONDITION | ANY SECURABLE AMOUNT |
| POWER USAGE DEGREE OF EMERGENCY | LEVEL 3 |
| POWER CONSUMPTION AMOUNT PER UNIT TIME | 100 w |

FIG.32

26

| PREVIOUS INFLOW TIME | 2013/06/12 10:11:32.123 |
|---|---|
| POWER USAGE LEVEL VALUE | 10 kwh |

FIG.33

**TOKEN ALLOCATION PROCESSING**

ACQUIRE CURRENT TIME STAMP, PREVIOUS INFLOW TIME STAMP,IN-PERIOD PERMISSIBLE POWER USAGE AMOUNT, POWER SHARING TIME PERIOD, AND POWER USAGE LEVEL VALUE ⌐S141

COMPUTE TOKEN INFLOW AMOUNT ⌐S142

ADD TOKEN INFLOW AMOUNT TO POWER USAGE LEVEL VALUE ⌐S143

DETERMINE LIMIT VALUE ⌐S102

SUBTRACT TOKEN REQUEST AMOUNT FROM POWER USAGE LEVEL VALUE ⌐S103

S104
IS SUBTRACTION RESULT ≥ LIMIT VALUE?   N

Y

S108
IS POWER SECURING CONDITION "TOTAL AMOUNT ALL AT ONCE"?   N

S109
Y
SET TOKEN ALLOCATION AMOUNT TO "0"

S105
SET SUBTRACTION RESULT FOR POWER USAGE LEVEL VALUE

S110
SET LIMIT VALUE FOR POWER USAGE LEVEL VALUE

SET "TOKEN REQUEST AMOUNT" FOR TOKEN ALLOCATION AMOUNT

SET "POWER USAGE LEVEL VALUE - LIMIT VALUE" FOR TOKEN ALLOTTED AMOUNT

S106

S111

RETURN TOKEN ALLOCATION AMOUNT ⌐S107

END

# FIG.34

```
    ┌─────────────────────────┐
    │   TOKEN RECEPTION       │
    │     PROCESSING          │
    └─────────────────────────┘
                │
    ┌─────────────────────────┐
    │ ACQUIRE CURRENT TIME STAMP │ ── S151
    │ AND POWER USAGE LEVEL VALUE │
    └─────────────────────────┘
                │
    ┌─────────────────────────┐
    │ COMPUTE TOKEN INFLOW AMOUNT │ ── S152
    └─────────────────────────┘
                │
    ┌─────────────────────────┐
    │ ADD TOKEN INFLOW AMOUNT AND │ ── S153
    │ TOKEN RETURN AMOUNT TO POWER │
    │    USAGE LEVEL VALUE     │
    └─────────────────────────┘
                │
    ┌─────────────────────────┐
    │ SET ADDITION RESULT FOR │ ── S154
    │ POWER USAGE LEVEL VALUE │
    └─────────────────────────┘
                │
           ┌─────────┐
           │   END   │
           └─────────┘
```

# FIG.35

39A

| OPTIMUM POWER AMOUNT (Full#c) | 6 kwh |
|---|---|
| MINIMUM REQUIRED POWER AMOUNT | - |
| POWER SECURING CONDITION | ANY SECURABLE AMOUNT |
| POWER USAGE DEGREE OF EMERGENCY | LEVEL 3 |

EP 2 869 250 A1

# FIG.36

TOKEN REQUEST
PROCESSING A

REQUEST TOKEN — S161

ADD ALLOCATED TOKENS TO
SECOND BUCKET 37A — S162

IS SECOND
BUCKET 37A FULL? — S163

N

NOTIFY LIMITED
(USE NOT POSSIBLE) — S165

SCHEDULE ACTIVATION OF
POWER CONSUMPTION
CONTINUATION
DETERMINATION
PROCESSING A — S166

Y

S164
NOTIFY START OF USE

END

53

# FIG.37

POWER CONSUMING
APPLIANCE 30A

POWER MANAGEMENT
DEVICE 20

SECOND BUCKET 37A

TOKEN ALLOCATION
SECTION 22

FIRST BUCKET 25

POWER
CONSUMING

CONTROL
USER    SECTION 31A    0    Full#c    SECTION 32A

TOKEN RECEPTION
SECTION 23

LIMIT    STANDARD
VALUE    VALUE    Full#s

START    164    163    TOKEN
                       REQUEST
                       AMOUNT

TOKEN REQUEST

TOKEN ALLOCATION

LIMITED

166

TOKEN REQUEST

TOKEN ALLOCATION

LIFT
LIMITATION    START
              USAGE    167

168    165

EP 2 869 250 A1

FIG.38

26

| PREVIOUS INFLOW TIME | 2013/06/12 10:11:32.123 |
|---|---|
| POWER USAGE LEVEL VALUE | 10 kwh |
| POWER SAVING CUMULATIVE VALUE | 15 kwh |

## EUROPEAN SEARCH REPORT

Europäisches
Patentamt
European
Patent Office
Office européen
des brevets

Application Number

EP 14 18 4989

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 487 969 A1 (GEN ELECTRIC [US]) 15 August 2012 (2012-08-15) * figures 1-3 * * paragraphs [0001], [0003], [0004] * * paragraphs [0008] - [0044] * ----- | 1-15 | INV. G06Q10/04 G06Q10/06 G06Q50/06 |
| X | GANG XIONG ET AL: "Smart (in-home) power scheduling for demand response on the smart grid", INNOVATIVE SMART GRID TECHNOLOGIES (ISGT), 2011 IEEE PES, IEEE, 17 January 2011 (2011-01-17), pages 1-7, XP031860970, DOI: 10.1109/ISGT.2011.5759154 ISBN: 978-1-61284-218-9 * abstract * * sections I-III * ----- | 1-15 | |
| X | TAKEKAZU KATO ET AL: "Energy on demand: Efficient and versatile energy control system for home energy management", SMART GRID COMMUNICATIONS (SMARTGRIDCOMM), 2011 IEEE INTERNATIONAL CONFERENCE ON, IEEE, 17 October 2011 (2011-10-17), pages 392-397, XP032073406, DOI: 10.1109/SMARTGRIDCOMM.2011.6102354 ISBN: 978-1-4577-1704-8 * the whole document * ----- | 1-15 | TECHNICAL FIELDS SEARCHED (IPC) G06Q |

The present search report has been drawn up for all claims

| Place of search | Date of completion of the search | Examiner |
|---|---|---|
| The Hague | 31 March 2015 | Meijs, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 4989

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2015

| Patent document cited in search report | | Publication date | Patent family member(s) | | Publication date |
|---|---|---|---|---|---|
| EP 2487969 | A1 | 15-08-2012 | AU | 2012200794 A1 | 30-08-2012 |
| | | | BR | 102012003063 A2 | 07-01-2014 |
| | | | CA | 2767619 A1 | 11-08-2012 |
| | | | EP | 2487969 A1 | 15-08-2012 |
| | | | JP | 2012170321 A | 06-09-2012 |
| | | | NZ | 598148 A | 30-08-2013 |
| | | | US | 2012209442 A1 | 16-08-2012 |

For more details about this annex : see Official Journal of the European Patent Office, No. 12/82

**REFERENCES CITED IN THE DESCRIPTION**

**Patent documents cited in the description**

- JP 2005261050 A
- JP 2013005657 A
- JP 2008092680 A